# EUROPÄISCHE PATENTSCHRIFT

(11) **EP 2 237 122 B1**
(45) Veröffentlichungstag und Bekanntmachung des Hinweises auf die Patenterteilung: **26.06.2013**
(21) Anmeldenummer: 10158911.7
(22) Anmeldetag: 01.04.2010
(51) Int. Cl.: G05B 19/4097, G05B 19/4093

(54) **Verfahren und Vorrichtung zum Erzeugen von Steuerdaten zum Steuern eines Werkzeugs an einer Werkzeugmaschine**
Method and device for generating control data for controlling a tool on a machine tool
Procédé et dispositif de production de données de commande destinées à commander un outil sur une machine-outil

(30) Priorität: 06.04.2009 DE 102009016338; 02.04.2009 DE 102009015934
(43) Veröffentlichungstag der Anmeldung: 06.10.2010
(73) Patentinhaber: DMG Electronics GmbH, 87459 Pfronten (DE)
(72) Erfinder: Hahn, Rudolf, 87645 Schwangau (DE)
(74) Vertreter: MERH-IP Matias Erny Reichl Hoffmann

(56) Entgegenhaltungen:
- EP-A2- 0 503 642
- EP-A2- 0 798 616
- US-A1- 2004 128 019
- US-A1- 2005 126 352

## Beschreibung

Die vorliegende Erfindung betrifft ein Verfahren und eine Vorrichtung zum Erzeugen von Steuerdaten zum Steuern eines vorgegebenen Werkzeugs an einer Werkzeugmaschine zum Bearbeiten eines eingespannten Werkstücks von einem Rohteil in ein Fertigteil durch Zerspanen.

Insbesondere betrifft die Erfindung ein Verfahren und eine Vorrichtung zum Erzeugen von Steuerdaten zum Steuern eines vorgegebenen Fräswerkzeugs an einer CNC-gesteuerten Werkzeugmaschine oder einem CNC-gesteuerten Bearbeitungszentrum zum Bearbeiten eines in der Werkzeugmaschine eingespannten Werkstückes von einem Rohteil in ein Fertigteil mit einer angestrebten vorgegebenen Fertigteilgeometrie.

### Hintergrund der Erfindung

CNC-gesteuerte Werkzeugmaschinen sind in den unterschiedlichsten Ausführungen aus dem Stand der Technik wohlbekannt. CNC ("Computerized Numerical Control") bedeutet hierbei, dass die Werkzeugmaschine numerisch gesteuert wird, d.h. anhand eines CNC-Programms, das die CNC-Steuerdaten umfasst. Die Werkzeugmaschine ist mit einem Werkzeug ausgerüstet, das Material von dem Werkstück durch Zerspanen abträgt. Die Steuerung des Werkzeugs erfolgt mittels einer Steuervorrichtung anhand von den CNC-Steuerdaten des CNC-Programms. Hierdurch wird eine präzise maschinelle Bearbeitung eines in der Werkzeugmaschine eingespannten Werkstücks anhand der festgelegten CNC-Steuerdaten möglich.

Heutzutage werden CNC-Programme mittels CAM-Systemen (CAM für "Computer Aided Manufacturing") softwareunterstützt erstellt. Ein erstelltes CNC-Programm umfasst Steuerdaten, die ein eingesetztes Werkzeug relativ zu einem in der Werkzeugmaschine eingespannten Werkstück entlang einer generierten Bahnen steuert, um Material des Werkstücks bei Abfahren der Bahn abzutragen.

Aus dem Stand der Technik sind Vorrichtungen und Verfahren zur Simulation einer Bearbeitung eines virtuellen Werkstücks an einer virtuellen Werkzeugmaschine bekannt, wobei die Bearbeitung des Werkstücks an einer Darstellungseinrichtung visualisiert wird, und ein Anwender die Simulation auswerten kann um gegebenenfalls Änderungen der Steuerdaten zum Steuern des Werkzeugs zu erstellen oder zu ändern.

Aus DE 10 2006 043390 A1 des Anmelders ist eine Vorrichtung und ein Verfahren zur Simulation eines Ablaufs zur Bearbeitung eines Werkstücks an einer Werkzeugmaschine für die Simulation von Abläufen an CNC-Maschinen bekannt. Die Vorrichtung umfasst Speichereinrichtungen zum Speichern von Werkzeugmaschinendaten zur Erzeugung eines virtuellen Abbilds einer Werkzeugmaschine, zum Speichern von Werkstückdaten zur Erzeugung eines virtuellen Abbilds eines Werkstücks und zum Speichern von Betriebsmitteldaten zur Erzeugung eines virtuellen Abbilds eines Betriebsmittels. Durch diese Einrichtungen werden die für die Erzeugung eines realitätsnahen Abbildes der Werkzeugmaschine erforderlichen Daten bereitgestellt. Dies beinhaltet nicht nur eine Darstellung des Werkzeugtisches und des Werkstückes, sondern auch die Möglichkeit, die Spannsituation im Detail während der Simulation darzustellen. Ferner wird es ermöglicht, die Werkzeugmaschine in verschiedenen Konfigurationen samt Werkstück und Werkzeug darzustellen. Die entsprechenden Daten werden von den entsprechenden Einrichtungen der Gesamtsimulationseinrichtung zugeführt. Damit liegt virtuell eine mit Werkstück und Werkzeug bestückte Werkzeugmaschine vor.

Aus EP 0 524 344 A1 ist ein graphisch interaktives dialogorientiertes Programmiersystem zur Erzeugung von Programmen zur Steuerung des Bearbeitungsprozesses für eine CNC-Werkzeugmaschine bekannt. Das dialogorientierte Programm erleichtert es dem Anwender oder Bediener, Steuerungsprogramme für eine Werkzeugmaschine durch graphische Dialogführung möglichst einfach zu ändern, zu ergänzen oder neu zu erstellen.

Aus JP 2001 282331 A ist eine Werkzeug-Simulationseinrichtung bekannt, die dazu geeignet ist, ein reales Werkzeug einer Werkzeugmaschine zu simulieren, wobei eine Steuerung für eine Bearbeitung durch das Werkzeug verändert werden kann. Die Simulation der Bearbeitung durch das Werkstück wird auf einem Bildschirm angezeigt.

Aus US 6 584 373 B1 ist ein Verfahren zum Steuern eines CNC-Werkzeugs und ein Steuerungssystem zum Steuern eines CNC-Werkzeugs bekannt für eine Steuerung in zyklisch wiederkehrenden Sequenzen. Das Steuerungssystem umfasst eine Dateneinspeisungseinheit, eine Visualisierungseinheit, eine Werkzeugmaschinenprüfeinheit und eine NC-Steuereinheit. Hierbei enthält die NC-Steuereinheit mindestens ein gespeichertes NC-Programm zum Erzeugen einer Bewegungssequenz für das CNC-Werkzeug.

Die Bahnberechnung des Stands der Technik für ein CNC-gesteuertes Werkzeug basiert auf geometrischen Größen und orientiert sich an der angestrebten Fertigteilgeometrie des Werkstücks. Es werden Steuerdaten derart erzeugt, dass das Material des Werkstücks durch Hin- und Herbewegung eines eingesetzten Werkzeugs entlang einfacher Bahnen Schicht für Schicht abgetragen wird, bis die Fertigteilkontur erreicht wird. Dies wird auch Abzeilen genannt.

Das Zerspanvolumen entlang einer Bearbeitungsbahn (abgetragenes Materialvolumen pro Zeiteinheit), d.h. die Schnittleistung des Werkzeugs im Material wird durch geometrische Größen bestimmt. Ausgehend von der Rohteilgeometrie wird an einem CAM-System eine Bearbeitungsbahn generiert, die sich bei unkritischen Konturverläufen der Werkstückgeometrie, d.h. Konturverläufen, die die Fertigteilgeometrie nicht gefährden, an statischen, in Schnitttabellen festgelegten Zerspanvolumina orientiert.

Bei Annäherung an die Fertigteilkontur werden nur noch Fräsbahnen generiert, die mit konstantem Vorschub das Restmaterial mit unterschiedlichen eingesetzten Werkzeugen der Fertigteilkontur folgend abtragen. Die Bearbeitungszeit, also die Zeitspanne, die nötig ist, ausgehend von dem Rohteil durch Abtragen von Material die Fertigteilkontur zu erreichen, ist durch die programmierten Vorschubgeschwindigkeiten und die festgelegte(n) Bearbeitungsbahn(en) festgelegt.

Um die Bearbeitungszeit eines Werkstücks von einem Rohteil in ein Fertigteil zu reduzieren, generieren CAM-Systeme, die dem Stand der Technik bekannt sind, eine oder mehrere Bahnen für ein Werkzeug, die eine Luftschneidezeit reduzieren. Die Luftschneidezeit ist die Zeit, die ein gesteuertes Werkzeug in der Werkzeugmaschine gesteuert wird, ohne Material von einem eingespannten Werkstück abzutragen.

Luftschneidezeit entsteht zum Beispiel, wenn das Werkzeug von einem Punkt des Werkstückes zu einem anderen Punkt des Werkstückes geführt wird um eine neue Bearbeitungsbahn zu zum Abtragen von Material zu beginnen, wobei während der Luftschneidezeit kein Material von dem Werkstück abgetragen wird. Im Gegensatz dazu ist eine Bearbeitungsbahn eine Bahn, entlang einer solchen das Werkzeug zum Abtragen von Material des Werkstücks gesteuert wird, d.h. ein Werkzeug trägt entlang einer Bearbeitungsbahn Material vom Werkstück ab.

EP 0 503 642 A2 beschreibt ein Verfahren zur Erzeugung von Bahndaten für ein Fräswerkzeug gemäß dem Oberbegriff des Anspruchs 1. US 2005/126352 A1 zeigt ein Verfahren zur Erzeugung von Bahndaten ähnlich zu dem Verfahren der EP 0 503 642 A2. US 2004/128019 A1 zeigt ein CAD/CAM System zur Erzeugung von Steuerdaten wie z.B. einem CNC-Programm. EP 0 798 616 A1 zeigt ein Verfahren zur Erzeugung von Bahndaten für ein Fräswerkzeug, bei dem die Bahndaten aus diskreten Punkten erzeugt werden.

### Zusammenfassung der Erfindung

Ausgehend vom Stand der Technik ergibt sich die Aufgabe der vorliegenden Erfindung, ein Verfahren und eine Vorrichtung zum Erzeugen von Steuerdaten zum Steuern eines Werkzeugs an einer Werkzeugmaschine bereitzustellen, die eine im Vergleich zum Stand der Technik reduzierte Bearbeitungszeit ermöglichen.

Erfindungsgemäß wird diese Aufgabe gelöst durch ein Verfahren mit den Merkmalen des Anspruchs 1 und eine Vorrichtung mit den Merkmalen des Anspruchs 10.

Vorteilhafte Ausgestaltungen und bevorzugte Ausführungsbeispiele der Erfindung werden durch die abhängigen Ansprüche beschrieben.

Die Erfindung betrifft ein Verfahren zum Erzeugen von Steuerdaten zum Steuern eines vorgegebenen Werkzeugs an einer Werkzeugmaschine zum Bearbeiten eines eingespannten Werkstücks von einem Rohteil in ein Fertigteil durch Zerspanen, umfassend den Schritt Erzeugen von Bahndaten, die angeben, welche Bearbeitungsbahn beziehungsweise Bearbeitungsbahnen ein mindestens ein vorgegebenes Werkzeug mit welcher Vorschubgeschwindigkeit und mit welcher Werkzeugorientierung relativ zum Werkstück zum Abtragen von Material des Werkstücks durch Vorschub abfahren soll.

Erfindungsgemäß umfasst das Verfahren die Verfahrensschritte Erzeugen von Bearbeitungsgeometrie-Modelldaten einer Bearbeitungsgeometrie des Werkstücks, die den momentanen Abtragszustand des Werkstücks zu einem bestimmten Bearbeitungszeitpunkt beschreiben, Bereitstellen von Fertigteilgeometrie-Modelldaten, die eine Fertigteilgeometrie des Werkstücks beschreiben, Erzeugen von Differenzgeometrie-Modelldaten anhand eines Vergleichs der Bearbeitungsgeometrie-Modelldaten mit den Fertigteilgeometrie-Modelldaten zum Bestimmen einer Differenzgeometrie zwischen der Bearbeitungsgeometrie und der Fertigteilgeometrie, Erzeugen von Bahndaten einschließlich Festlegen einer Bearbeitungsbahn, die ein vorgegebenes Werkzeug zum Abtragen von Material der bestimmten Differenzgeometrie des Werkstücks durch Vorschub abfahren soll, anhand der erzeugten Differenzgeometrie-Modelldaten.

Erfindungsgemäß werden die Bahndaten anhand der Differenzgeometrie-Modelldaten erzeugt, wobei die Bahndaten zusätzlich zu der festgelegten Bearbeitungsbahn weiterhin angeben, mit welcher Vorschubgeschwindigkeit und mit welcher Werkzeugorientierung des vorgegebenen Werkzeugs relativ zu dem Werkstück das vorgegebene Werkzeug die anhand der Differenzgeometrie festgelegte Bearbeitungsbahn abfahren soll.

Hierbei werden die Bahndaten erfindungsgemäß mit der Maßgabe erzeugt, dass das vorgegebene Werkzeug beim Abfahren der Bearbeitungsbahn in Abhängigkeit eines maximalen Zerspanvolumens des vorgegebenen Werkzeugs erfindungsgemäß einen maximal großen Teil des Volumens der bestimmten Differenzgeometrie des Werkstücks pro Zeiteinheit abträgt.

Das Erzeugen von Steuerdaten mit der dazugehörigen Bearbeitungsbahnberechnung erfolgt somit nicht nur, wie im Stand der Technik, anhand der Fertigteilgeometrie, sondern ist zusätzlich am erreichten beziehungsweise mit einem vorgegebenen Werkzeug in Abhängigkeit von der Differenzgeometrie erreichbaren Zerspanvolumen (abgetragenes Materialvolumen pro Zeiteinheit) orientiert um das Zerspanvolumen in Abhängigkeit von der Differenzgeometrie zu maximieren.

Durch den Schritt Erzeugen von Bearbeitungsgeometrie-Modelldaten einer Bearbeitungsgeometrie des Werkstücks kann zu jedem beliebigen Zeitpunkt der Bearbeitung des Werkstücks die momentane Geometrie des Werkstücks zu diesem Zeitpunkt bestimmt werden, so dass der momentane Abtragungszustand zu diesem Bearbeitungszeitpunkt bekannt ist.

Die Bearbeitungsgeometrie ist eine Geometrie des Werkstücks zu einem beliebigen Bearbeitungszeitpunkt bei Bearbeitung des Werkstücks, also ein Zwischenzustand zwischen Rohteil- und Fertigteilgeometrie. Vor Abtragen von Material des Werkstücks, bevor ein erstes vorgegebenes Werkzeug durch Vorschub Material des Werkstücks abträgt, ist die Bearbeitungsgeometrie des Werkstücks identisch mit der Rohteilgeometrie und nachdem das Werkstück fertig gestellt ist, ist die Bearbeitungsgeometrie identisch mit der Fertigteilgeometrie.

Das Bereitstellen von Fertigteilgeometrie-Modelldaten, die die Fertigteilgeometrie des Werkstücks beschreiben, ermöglicht einen Vergleich der Fertigteilgeometrie und der im letzten Verfahrensschritt erfindungsgemäß bestimmten Bearbeitungsgeometrie des Werkstückes. Durch den Vergleich können Position, Lage und Geometrie des noch überstehenden Materials des Werkstücks, also des noch bis zur Fertigstellung des Werkstücks abzutragenden Materials zu einem bestimmten Bearbeitungszeitpunkt, in dem die ersten Bearbeitungsgeometrie-Modelldaten erzeugt werden, bestimmt werden. Somit können die Differenzgeometrie-Modelldaten anhand des Vergleichs der Bearbeitungsgeometrie-Modelldaten mit den Fertigteilgeometrie-Modelldaten erzeugt werden.

Dies hat den Vorteil, dass zu jedem beliebigen Zeitpunkt der Bearbeitung des Werkstücks das Bestimmen einer momentanen Differenzgeometrie des Werkstückes zu diesem Zeitpunkt möglich ist, die genau dem zu diesem Bearbeitungszeitpunkt noch abzutragenden Material des Werkstücks entspricht. Somit ist es möglich, zu jedem Zeitpunkt der Bearbeitung zu bestimmen, welches Material noch von dem Werkstück abgetragen werden muss, einschließlich der Geometrie und Form des noch abzutragenden Materials.

Anhand der bestimmten momentanen Differenzgeometrie-Modelldaten ist es möglich, eine Bearbeitungsbahn durch die Differenzgeometrie des Werkstücks zum Abfahren des vorgegebenen Werkzeugs mit der Maßgabe zu berechnen, dass das vorgegebene Werkzeug beim Abfahren der Bahn in Abhängigkeit eines maximalen Zerspanvolumens des vorgegebenen Werkzeugs einen maximal großen Teil des Volumens der bestimmten Differenzgeometrie des Werkstücks pro Zeiteinheit abträgt.

Neben der reinen geometrischen Bahnberechnung werden erfindungsgemäß die Bahndaten derart erzeugt, dass sie zusätzlich zu der festgelegten Bearbeitungsbahn die Vorschubgeschwindigkeit und Werkzeugorientierung entlang der Bahn festlegen. Die Vorschubgeschwindigkeit ist hierbei ein wichtiger Parameter von dem das erreichte tatsächliche Zerspanvolumen beim Abfahren der Bahn durch das vorgegebene Werkzeug abhängt, da eine höhere Vorschubgeschwindigkeit direkt zu einem höheren Zerspanvolumen führt.

Das erreichbare Zerspanvolumen bei Abfahren der Bahn hängt weiterhin von der Orientierung des Werkzeugs relativ zu der Vorschubrichtung ab. Weitere Parameter, die das erreichbare Zerspanvolumen bestimmen und bei der Festlegung der Bearbeitungsbahn berücksichtigt werden können, sind neben Werkzeugmaschinenparametern wie Spindelleistung oder Vorschubwert der Achsen zum Beispiel auch das Material des Werkstücks, der Durchmesser und Höhe des Werkzeugs und/oder die Zahl der Schneiden des Werkzeugs.

Das maximale Zerspanvolumen des vorgegebenen Werkzeugs stellt erfindungsgemäß die Maßgabe bei der Bahnberechnung dar. Es ist das maximal zulässige Materialvolumen, das pro Zeiteinheit durch das vorgegebene Werkzeug abgetragen werden kann und somit gibt eine Obergrenze für das erreichbare tatsächliche Zerspanvolumen beim Abtragen von Material des Werkstücks an.

Das maximale Zerspanvolumen des vorgegebenen Werkzeugs ist eine werkzeugspezifische Eigenschaft, die von geometrischen Eigenschaften und Material des Werkzeugs abhängt und die zusätzlich von dem Material des eingespannten Werkstücks abhängen kann.

Somit ergibt sich eine optimale Reduktion der Bearbeitungszeit, wenn beim Abtragen von Material durch Vorschub des vorgegebenen Werkzeugs entlang der berechneten Bearbeitungsbahn, soweit möglich, an jedem Punkt der Bearbeitungsbahn das maximale Zerspanvolumen des vorgegebenen Werkzeugs erreicht wird.

Durch das Verfahren der vorliegenden Erfindung wird eine erhebliche Reduktion der Gesamtbearbeitungszeit im Vergleich zu herkömmlichen Verfahren erreicht, bei denen die Bahnen nur anhand der Fertigteilgeometrie generiert werden, da bei dem erfindungsgemäßen Verfahren die Bahnberechnung zusätzlich zur Berücksichtigung der Fertigteilgeometrie zerspanvolumenorientiert und anhand einer momentanen Differenzgeometrie erfolgt.

Vorzugsweise umfasst das Verfahren weiterhin den Schritt Auswählen eines Werkzeugs der Werkzeugmaschine mit einem vergleichsweise hohen maximalen Zerspanvolumen in Abhängigkeit der Differenzgeometrie-Modelldaten als vorgegebenes Werkzeug.

Dies hat den Vorteil, dass bei einer Bearbeitung des Werkstücks an einer Werkzeugmaschine, die mehrere Werkzeuge mit unterschiedlichen maximalen Zerspanvolumina und unterschiedlichen Werkzeugeigenschaften umfasst, ein Werkzeug als vorgegebenes Werkzeug zum Abfahren der berechneten Bahn in Abhängigkeit der Gegebenheiten der bestimmten momentanen Differenzgeometrie ausgewählt werden kann, so dass ein möglichst hohes Zerspanvolumen bei Abfahren einer festgelegten Bahn erreicht werden kann. Als vorgegebenes Werkzeug wird hierbei nicht notwendigerweise das Werkzeug mit dem größten maximalen Zerspanvolumen bestimmt, sondern es wird ein Werkzeug bestimmt, dass abhängig von der bestimmten momentanen Differenzgeometrie ein optimales möglichst großes Zerspanvolumen erreichen kann.

Vorzugsweise werden die Schritte Erzeugen von Bearbeitungsgeometrie-Modelldaten des Werkstücks zu einem bestimmten Bearbeitungszeitpunkt, Erzeugen von Differenzgeometrie-Modelldaten anhand eines Vergleichs der Bearbeitungsgeometrie-Modelldaten mit den Fertigteilgeometrie-Modelldaten und Erzeugen von Bahndaten in dieser Reihenfolge kontinuierlich wiederholt, wobei mindestens zweite Bearbeitungsgeometrie-Modelldaten einer zweiten Bearbeitungsgeometrie des Werkstücks und zweite Differenzgeometrie-Modelldaten zu einem bestimmten zweiten Bearbeitungszeitpunkt, nachdem das mindestens eine vorgegebene Werkzeug eine erste festgelegte Berarbeitungsbahn anhand von ersten Bahndaten abgefahren hat, bei einer ersten Wiederholung der Schritte erzeugt werden, wobei anhand der zweiten Differenzgeometrie-Modelldaten mindestens eine zweite Bearbeitungsbahn festgelegt wird durch Erzeugen zweiter Bahndaten, die vorzugsweise mit der Maßgabe erzeugt werden, dass ein für die zweite Bearbeitungsbahn vorgegebenes Werkzeug beim Abfahren der zweiten Bearbeitungsbahn in Abhängigkeit eines maximalen Zerspanvolumens dieses vorgegebenen Werkzeugs einen maximal großen Teil des Volumens der bestimmten zweiten Differenzgeometrie des Werkstücks pro Zeiteinheit abträgt.

Dies hat den Vorteil, dass ein Werkstück in einer Mehrzahl von Bearbeitungsschritten von einem Rohteil in ein Fertigteil durch Abtragen von Material bearbeitet werden kann, wobei die Mehrzahl von Bearbeitungsschritten das Abfahren einer Mehrzahl von Bearbeitungsbahnen umfasst. Somit kann nach Abfahren einer Bearbeitungsbahn eine neue aktuelle Bearbeitungsgeometrie des Werkstücks erfasst werden, um eine neue aktuelle Differenzgeometrie zu ermitteln, so dass eine nächste Bearbeitungsbahn durch die Bahndaten anhand der neuen aktuellen Differenzgeometrie des Werkstücks festgelegt wird. Somit kann erfindungsgemäß zu jedem Bearbeitungszeitpunkt bei Abfahren jeder der Bearbeitungsbahnen der Bearbeitungsschritte ein möglichst großes Zerspanvolumen erreicht werden.

Da ein vorgegebenes Werkzeug bei der Bearbeitung des Werkstückes in mehreren Bearbeitungsschritten, die das Abfahren von mehreren Bearbeitungsbahnen umfassen, ist es erforderlich, das vorgegebene Werkzeug jeweils von einem Endpunkt einer Bearbeitungsbahn zu einem Anfangspunkt der nächsten Bearbeitungsbahn zu steuern, falls die Bearbeitungsbahnen nicht direkt zusammenhängen und eine Bearbeitungsbahn an die vorherige Bearbeitungsbahn anschliesst. Dabei kann Luftschneidezeit entstehen, die in die Gesamtbearbeitungszeit des Werkstücks eingeht.

Somit ergibt sich eine besonders vorteilhafte Möglichkeit für eine erhebliche Reduktion der Bearbeitungszeit, wenn die Steuerdaten der Bearbeitung des Werkstücks durch eine Kombination des erfindungsgemäßen zerspanvolumenorientierten Verfahrens mit einer zusätzlichen Minimierung der Luftschneidezeit erzeugt werden, wobei Bearbeitungsbahnen zum Abtragen von Material nach dem erfindungsgemäßen Verfahren festgelegt werden und wobei zusätzlich eine Luftschneidezeit, d.h. die Zeit der Bewegung eines Werkzeugs von einem Endpunkt einer Bearbeitungsbahn und dem Anfangspunkt einer nächsten Bearbeitungsbahn, minimiert wird. Dabei werden die Mehrzahl von Bearbeitungsbahnen zusätzlich mit der Maßgabe festgelegt, dass eine Luftschneidezeit bei dem Steuern des Werkzeugs von einem Endpunkt einer Bearbeitunsgbahn zu einem Anfangspunkt einer nächsten Bearbeitungsbahn minimal ist, falls die Bearbeitungsbahnen nicht zusammenhängen.

Vorzugsweise umfasst das Verfahren zum Erzeugen von Steuerdaten zusätzlich den Verfahrensschritt Bereitstellen von Werkzeugbevorratungsdaten, die die Werkzeugbevorratung der Werkzeugmaschine beschreiben und die angeben, welche Werkzeugeigenschaften die Werkzeuge der Werkzeugbevorratung Werkzeugmaschine haben und vorzugsweise wird der Verfahrensschritt des Auswählen eines vorgegebenen Werkzeugs mit vergleichsweise hohem maximalem Zerspanvolumen in Abhängigkeit der momentanen Differenzgeometrie-Modelldaten als vorgegebenes Werkzeug jeweils für eine nächste Bearbeitungsbahn ausgeführt. Zusätzlich kann das Verfahren der vorliegenden Erfindung gegebenenfalls den Verfahrensschritt des Festlegens eines Werkzeugwechsels des bisher vorgegebenen Werkzeugs mit einem für die nächste Bearbeitungsbahn ausgewählten vorgegebenen Werkzeug in Abhängigkeit der Werkzeugbevorratung der Werkzeugmaschine umfassen, wenn für die nächste Bearbeitungsbahn ein anderes Werkzeug aus der Werkzeugbevorratung der Werkzeugmaschine als das bisher vorgegebene Werkzeug als das für die nächste Bearbeitungsbahn vorgegebene Werkzeug ausgewählt wird.

Dies hat den Vorteil, dass bei einer Bearbeitung des Werkstücks in einer Mehrzahl von Bearbeitungsschritten für jede der festgelegten Bearbeitungsbahnen ein optimales Werkzeug als vorgegebenes Werkzeug ausgewählt werden kann und gegebenenfalls das für die im vorhergehenden Bearbeitungsschritt abgefahrene Bearbeitungsbahn vorgegebene Werkzeug mit einem für die nächste Bearbeitungsbahn im nächsten Bearbeitungsschritt als vorgegebenes Werkzeug ausgewähltes Werkzeug ausgewechselt werden kann.

Vorzugsweise umfasst die Werkzeugmaschine eine Steuervorrichtung zum Steuern des mindestens einen vorgegebenen Werkzeugs, wobei die Steuervorrichtung das Steuern des Werkzeugs relativ zu dem eingespannten Werkstück mit einer dreidimensionalen freien Werkzeugbewegung und einer freien Werkzeugorientierung um mindestens 5 Achsen ermöglicht, und wobei die Bahndaten vorzugsweise mit der zusätzlichen Maßgabe erzeugt werden, dass das mindestens eine vorgegebene Werkzeug bei Abfahren einer anhand der momentanen Differenzgeometrie festgelegten Bearbeitungsbahn die Vorschubrichtung, die Vorschubgeschwindigkeit und/oder die Orientierung relativ zu dem eingespannten Werkstück in Abhängigkeit von der momentanen Differenzgeometrie ändert.

Dies hat den Vorteil, dass die Werkzeugorientierung relativ zu dem Werkstück frei beweglich ist, wobei die mindestens 5 Achsen der Steuervorrichtung der Werkzeugmaschine vorzugsweise 3 Linearachsen und 2 Rundachsen umfassen um eine besonders vorteilhafte freie Beweglichkeit und Orientierbarkeit des Werkzeugs zu ermöglichen. Durch die sich daraus ergebende freie Werkzeugführung relativ zu dem eingespannten Werkstück sind neben geradlinigen Bahnverläufen eine Vielzahl von geometrisch komplexen krummlinigen Bearbeitungsbahnverläufen für das vorgegebene Werkzeug durch die Differenzgeometrie des Werkstücks möglich. So kann ein Bearbeitungsbahnverlauf gewählt werden, der das erreichbare Zerspanvolumen entlang des Bahnverlaufs maximiert.

Die Veränderbarkeit der Vorschubgeschwindigkeit und Vorschubrichtung des Werkzeugs hat somit den besonderen Vorteil, dass eine Bahn derart berechnet werden kann, dass die Änderungen der Vorschubgeschwindigkeit und Vorschubrichtung des vorgegebenen Werkzeugs entlang der Bahn so gesteuert werden können, so dass ein möglichst großes tatsächliches Zerspanvolumen erreicht werden kann. Dabei wird eine Vorschubgeschwindigkeit, Vorschubrichtung und Werkzeugorientierung vorzugsweise immer mit der Maßgabe erzeugt, dass das Zerspanvolumen in Abhängigkeit des maximalen Zerspanvolumens des vorgegebenen Werkzeugs maximiert wird, wobei zusätzlich kein Material der Fertigteilgeometrie abgetragen wird. Vorzugsweise kann sich die Vorschubgeschwindigkeit und Vorschubrichtung hierbei in Abhängigkeit der Differenzgeometrie kontinuierlich entlang der Bahn ändern.

Die Bahndaten können zusätzlich in Abhängigkeit zulässiger Leistungsparameter und/oder kinetische Eigenschaften der Werkzeugmaschine derart erzeugt werden, dass die maximalen Leistungsparameter und/oder kinetischen Eigenschaften der Werkzeugmaschine bei Abfahren einer anhand der Bahndaten festgelegten Bearbeitungsbahn durch ein vorgegebenes Werkzeug nicht überschritten werden.

Dies hat den Vorteil, dass keine Bahnen berechnet werden, die die zulässigen Leistungsparameter der Werkzeugmaschine überschreiten und/oder kinetischen Eigenschaften der Werkzeugmaschine überbelasten. Leistungsparameter und kinetische Eigenschaften der Werkzeugmaschine sind zum Beispiel Leistung der Spindeln, Vorschubleistung der Linearachsen, Leistung der Rundachsen, kinematisch zulässige Vorschubwerte an Linear- und Rundachsen, Vorschubbeschleunigung und/oder eine maximal zulässige Belastung von Einspannmitteln oder Elementen der Steuervorrichtung der Werkzeugmaschine durch Kräfte und/oder Drehmomente.

Zusätzlich können die Bahndaten in Abhängigkeit eines oder mehrerer maximaler Belastungswerte des mindestens einen vorgegebenen Werkzeugs derart erzeugt werden, dass eine Belastung des vorgegebenen Werkzeugs bei Abfahren einer anhand der Bahndaten festgelegten Bearbeitungsbahn den oder die maximale(n) Belastungswert(e) des vorgegebenen Werkzeugs nicht überschreitet.

Dies hat den Vorteil, dass bei der Bearbeitungsbahnberechnung neben der Vorgabe der Optimierung des Zerspanvolumens zusätzlich als Maßgabe ein oder mehrere maximale Belastungswerte des Werkzeugs nicht überschritten werden sollen und somit immer eine Bahn berechnet wird und Bahndaten erzeugt werden, so dass der oder die maximalen zulässigen Belastungswerte des Werkzeugs nicht überschritten werden. Eine Belastung des Werkzeugs bezieht sich hierbei auf Kräfte und Drehmomente, die bei Abfahren der festgelegten Bearbeitungsbahn auf das vorgegebene Werkzeug wirken. Eine Beschädigung des Werkzeugs kann somit vermieden werden, da keine Bearbeitungsbahnen und Bahndaten so festgelegt werden, dass der oder die maximal zulässigen Belastungswerte des vorgegebenen Werkstücks überschritten werden.

Vorzugsweise umfasst das Verfahren der vorliegenden Erfindung den kontinuierlich wiederholten Verfahrensschritt des Erzeugens von Werkzeugmaschinengeometrie-Modelldaten, wobei die Werkzeugmaschinengeometrie-Modelldaten eine momentane Werkzeugmaschinengeometrie zu einem bestimmten Bearbeitungszeitpunkt des Werkstücks beschreiben, wobei die momentane Werkzeugmaschinengeometrie vorzugsweise eine momentane relative Orientierung und relative Position des vorgegebenen Werkzeugs, von Elementen der Steuervorrichtung und von Einspannmitteln der Werkzeugmaschine zum Einspannen des Werkstücks zu einem bestimmten Bearbeitungszeitpunkt umfasst, wobei die Bahndaten weiterhin vorzugsweise anhand der Werkzeugmaschinengeometrie-Modelldaten und/oder anhand eines Vergleichs der Werkzeugmaschinengeometrie-Modelldaten mit den Bearbeitungsgeometrie-Modelldaten zu dem bestimmten Bearbeitungszeitpunkt mit der zusätzlichen Maßgabe festgelegt werden, dass eine Kollision von Elementen der Werkzeugmaschine mit Elementen der Werkzeugmaschine und von Elementen der Werkzeugmaschine, außer des vorgegebenen Werkzeugs, mit dem Werkstück bei Abfahren der Bearbeitungsbahn durch das mindestens eine vorgegebene Werkzeug verhindert wird.

Dies hat den Vorteil, dass eine vorausschauende Kollisionsprüfung durchgeführt wird. Somit werden keine Bearbeitungsbahnen festgelegt, die bei Abfahren der Bahn durch das vorgegebene Werkzeug zu einer Kollision von Elementen der Steuervorrichtung mit Einspannmitteln der Werkzeugmaschine, mit dem Werkstück oder mit weiteren Elementen der Werkzeugmaschine führen. Nur das durch die Steuervorrichtung gesteuerte vorgegebene Werkzeug kommt neben den Einspannmitteln der Werkzeugmaschine in Kontakt mit dem zu bearbeitenden Werkstück. Diese vorausschauende Kollisionsprüfung ist insbesondere aufgrund des erfindugsgemäß gegebenenfalls komplizierten und krummlinigen Bearbeitungsbahnverlaufs in Abhängigkeit der Differenzgeometrie mit gegebenenfalls kontinuierlich ändernder Vorschubrichtung, Vorschubgeschwindigkeit und/oder Werkzeugorientierung vorteilhaft.

Vorzugsweise sind die Modelldaten jeweils geeignet, ein jeweiliges virtuelles 3D-Modell der Rohteilgeometrie des Werkstücks, der Bearbeitungsgeometrie des Werkstücks, der Fertigteilgeometrie des Werkstücks, der Differenzgeometrie und/oder der Werkzeugmaschine zu erzeugen.

Dies hat den Vorteil, dass die erzeugten und bereitgestellten Modelldaten in einem virtuellen 3D-Modell der jeweiligen Geometrie visuell dargestellt werden können. Somit kann der jeweilige Bearbeitungszustand des Werkstücks einem menschlichen Bediener angezeigt werden oder es können die jeweiligen Geometrien einzeln oder in Kombination angezeigt werden. Weiterhin ist es auch möglich, dem menschlichen Bediener eine festgelegte Bearbeitungsbahn durch die angezeigte Differenzgeometrie oder Bearbeitungsgeometrie anzuzeigen, so dass der menschliche Bediener diese festgelegte Bearbeitungsbahn überprüfen kann und gegebenenfalls ändernd eingreifen kann.

Vorzugsweise werden die Bahndaten anhand einer Simulation der Bearbeitung eines virtuellen Werkstücks durch ein oder mehrere virtuelle vorgegebene Werkzeuge an einer virtuellen Werkzeugmaschine erzeugt, wobei die Simulation vorzugsweise die Schritte Erzeugen eines virtuellen 3D-Modells des Werkstücks im Rohzustand, Erzeugen von ersten Bahndaten einschließlich Festlegen einer ersten Bearbeitungsbahn für ein virtuelles vorgegebenes Werkzeug, Simulieren des Abfahrens der festgelegten ersten Bearbeitungsbahn anhand der erzeugten ersten Bahndaten durch das virtuelle vorgegebene Werkzeug, Erzeugen von Bearbeitungsgeometrie-Modelldaten eines virtuellen 3D-Modells einer Bearbeitungsgeometrie des virtuellen Werkstücks, die einen virtuellen Abtragszustand des Werkstücks zu einem Bearbeitungszeitpunkt beschreiben, nachdem das Abfahren der ersten festgelegten Bearbeitungsbahn durch ein virtuelles vorgegebenes Werkzeug simuliert wurde, Bereitstellen von Fertigteilgeometrie-Modelldaten eines virtuellen 3D-Modells der Fertigteilgeometrie, die eine Fertigteilgeometrie des virtuellen Werkstücks beschreiben, Erzeugen von Differenzgeometrie-Modelldaten, die eine Differenzgeometrie des Materials beschreiben, das zum Erreichen der Fertigteilgeometrie noch von dem virtuellen Werkstück abgetragen werden muss, und Erzeugen von zweiten Bahndaten einschließlich Festlegen einer zweiten Bearbeitungsbahn anhand der Differenzgeometrie-Modelldaten umfasst, wobei die Bahndaten mit der Maßgabe erzeugt werden, dass das virtuelle vorgegebene Werkzeug bei Simulation des Abfahrens der zweiten Bearbeitungsbahn in Abhängigkeit eines maximalen Zerspanvolumens für das vorgegebene Werkzeug einen maximal großen Teil des Volumens der Differenzgeometrie des Werkstücks pro Zeiteinheit abträgt.

Dies hat den Vorteil, dass die Bearbeitungsbahnen und die dazugehörigen Bahndaten durch Simulation einer virtuellen Werkzeugmaschine festgelegt werden können. Eine virtuelle Werkzeugmaschine zum Simulieren eines Ablaufs zur Bearbeitung eines Werkstücks an einer Werkzeugmaschine für die Simulation von Abläufen an CNC-Maschinen ist in DE 10 2006 043390 A1 beschrieben, deren Offenbarung durch Bezugnahme in die vorliegende Anmeldung übernommen wird.

Durch eine Simulation der Bearbeitung eines Werkstücks kann auch ein großes Datenaufkommen durch die großen Datenmengen der 3D-Modelldaten besonders vorteilhaft bewältigt werden, da jeweils Zwischenschritte oder einzelne Bearbeitungsschritte simuliert und/oder gespeichert werden können. Desweiteren ermöglicht eine Simulation einem Bediener ein subjektives Eingreifen in den simulierten Bearbeitungsprozess durch Vorgabe oder Änderung von Simulationsparametern. Gegebenfalls kann die Gesamtbearbeitung des Werkstücks mit unterschiedlichen vorgegebenen Werkzeugen oder unterschiedlichen Werkzeugwechseln simuliert werden.

Es können zum Beispiel unterschiedliche Bearbeitungsstrategien simuliert werden, wobei die jeweiligen Bearbeitungsstrategien anhand der Simulation miteinander verglichen werden können, so dass eine optimale Bearbeitungsstrategie gewählt werden kann. Die Bearbeitungsstrategie umfasst zum Beispiel die oder das vorgegebene Werkzeug, festgelegte Werkzeugwechsel, Anfangs und Endpunkte von Bearbeitungsbahnen, die gegebenenfalls subjektiv von dem Bediener vorgegeben werden können.

Somit ist eine optimale Bearbeitung des Werkstücks durch Simulation und iterative Annäherung an die optimale Bearbeitung mit optimal reduzierter Bearbeitungszeit möglich. Die Simulation erfordert, dass das Abfahren einer festgelegten Bearbeitungsbahn anhand von Bahndaten durch ein virtuelles vorgegebenes Werkzeug simuliert werden kann, wobei das Zerspanvolumen entlang der Bearbeitungsbahn berechnet wird.

Eine Simulation ermöglicht es einem Bediener gegebenenfalls weiterhin ein subjektives Eingreifen in den simulierten Bearbeitungsprozess einzugreifen, subjektiv ein neues Werkzeug auszuwählen, subjektiv ein CNC-Teileprogramm anzupassen oder zu ändern, wobei dem Bediener Zwischenzustände des Bearbeitungsprozesses visuell dargestellt werden können, so dass er den Bearbeitungsprozess und die dazugehörigen Zwischenzustände einschätzen kann. Gegebenenfalls kann der Bediener bei bestimmten Zwischenzuständen abhängig von der dazugehörenden Differenzgeometrie eine Bearbeitungsstrategie anpassen. Die Simulation kann gegebenenfalls zusätzlich im Hinblick auf sicherheitsrelevante Parameter genutzt werden, den simulierten Bearbeitungsprozess sicherheitstechnisch zu überprüfen.

Vozugsweise werden die Bahndaten weiterhin derart erzeugt, dass eine Bearbeitungsbahn in einer Mehrzahl von zusammenhängenden Bearbeitungsbahnteilstücken festgelegt wird, wobei in Abhängigkeit der Differenzgeometrie ein Bearbeitungsbahnanfangspunkt bestimmt wird, wobei ausgehend von dem Bearbeitungsbahnanfangspunkt in Abhängigkeit der Differenzgeometrie ein erstes Bearbeitungsbahnteilstück festgelegt wird, das das Zerspanvolumen ausgehend von dem Bearbeitungsbahnanfangspunkt maximiert, und wobei ausgehend von einem Endpunkt eines jeden der Mehrzahl von zusammenhängenden Bearbeitungsbahnteilstücken in Abhängigkeit der Differenzgeometrie ein weiteres Bearbeitungsbahnteilstück festgelegt wird, das das Zerspanvolumen ausgehend von dem Endpunkt des vorherigen Bearbeitungsbahnteilstücks maximiert, wobei entlang des ersten und den weiteren Bearbeitungsteilstücks kein Material von der Fertigteilgeometrie abgetragen wird.

Dies hat den Vorteil, dass eine Bearbeitungsbahn festgelegt werden kann, die an jedem Endpunkt eines Teilstücks mit der Maßgabe festgelegt ist, dass ein vorgegebenes Werkzeug bei Abfahren der festgelegten Bahn anhand der erzeugten Bahndaten das Zerspanvolumen in Abhängigkeit des maximalen Zerspanvolumens des vorgegebenen Werkzeugs maximiert. Dabei werden die Bearbeitungsbahnteilstücke vorzugsweise so kurz festgelegt, dass Vorschubrichtung, Vorschubgeschwindigkeit und/oder Werkzeugorientierung möglichst nach kurzen Bearbeitungsbahnteilstücken an die Gegebenenheiten der Differenzgeometrie angepasst werden können, mit der Maßgabe, abhängig von der Differenzgeometrie ein weiteres Bearbeitungsbahnteilstück festzulegen, so dass das Zerspanvolumen maximiert wird. Somit kann eine gesamte Bearbeitungsbahn festgelegt werden, die an jedem Punkt der Bearbeitungsbahn zerspanvolumenoptimiert festgelegt ist, da der erfindungsgemäß optimale Bahnverlauf durch iterative Optimierung und Festlegung in zerspanvolumenorientiert optimierten Teilbahnstücken festgelegt ist.

Zur Ausführung des Verfahrens nach der vorliegenden Erfindung wird erfindungsgemäß eine Vorrichtung zum Erzeugen von Steuerdaten zum Steuern eines vorgegebenen Werkzeugs an einer Werkzeugmaschine zum Bearbeiten eines eingespannten Werkstücks von einem Rohteil in ein Fertigteil durch Zerspanen bereitgestellt. Die Vorrichtung umfasst eine Bahndaten-Erzeugungseinrichtung zum wiederholten Erzeugen von Bahndaten, die angeben, welche mindestens eine Bearbeitungsbahn ein mindestens ein vorgegebenes Werkzeug zum Abtragen von Material des Werkstücks durch Vorschub abfahren soll.

Erfindungsgemäß umfasst die Vorrichtung zum Erzeugen von Steuerdaten eine Bearbeitungsgeometrie-Modelldaten-Erzeugungseinrichtung zum Erzeugen von ersten Bearbeitungsgeometrie-Modelldaten einer Bearbeitungsgeometrie des Werkstücks, die den momentanen Abtragszustand des Werkstücks zu einem bestimmten Bearbeitungszeitpunkt beschreiben, eine Fertigteilgeometrie-Bereitstellungseinrichtung zum Bereitstellen von Fertigteilgeometrie-Modelldaten, die eine Fertigteilgeometrie des Werkstücks beschreiben, eine Differenzgeometrie-Modelldaten-Erzeugungseinrichtung zum Erzeugen von Differenzgeometrie-Modelldaten anhand eines Vergleichs der Bearbeitungsgeometrie-Modelldaten mit den Fertigteilgeometrie-Modelldaten zum Bestimmen einer momentanen Differenzgeometrie zwischen der Bearbeitungsgeometrie und der Fertigteilgeometrie, und eine Bahndaten-Erzeugungseinrichtung zum Erzeugen von Bahndaten einschließlich dem Festlegen einer Bearbeitungsbahn, die ein vorgegebenes Werkzeug zum Abtragen von Material der bestimmten momentanen Differenzgeometrie des Werkstücks durch Vorschub anhand der erzeugten momentanen Differenzgeometrie-Modelldaten mit der Maßgabe abfahren soll, dass das vorgegebene Werkzeug beim Abfahren der Bearbeitungsbahn in Abhängigkeit eines maximalen Zerspanvolumens für das vorgegebenen Werkzeugs einen maximal großen Teil des Volumens der Differenzgeometrie des Werkstücks pro Zeiteinheit abträgt.

Vorzugsweise umfasst die Vorrichtung weiterhin eine Werkzeugmaschinen-Parametererfassungseinrichtung zum Erfassen von zulässigen Leistungsparametern und/oder kinetische Eigenschaften der Werkzeugmaschine, wobei die Bahndaten-Erzeugungseinrichtung die Bahndaten mit der zusätzlichen Maßgabe erzeugt, dass die maximalen Leistungsparameter und/oder kinetischen Eigenschaften der Werkzeugmaschine bei Abfahren einer anhand der Bahndaten festgelegten Bearbeitungsbahn durch ein vorgegebenes Werkzeug nicht überschritten werden.

Dies hat den Vorteil, dass maximal zulässige Leistungsparametern und/oder kinetische Eigenschaften der Werkzeugmaschine erfasst werden können, wobei dann die Bearbeitungsbahnen und die Bahndaten derart festgelegt werden können, dass die erfassten Leistungsparameter und kinetischen Eigenschaften nicht überschritten werden.

Vorzugsweise umfasst die Vorrichtung weiterhin eine Werkzeugeigenschafts-Erfassungseinrichtung zum Erfassen von Werkzeugeigenschaften der Werkzeuge der Werkzeugmaschine, wobei die Werkzeugeigenschaften einen oder mehrere maximale Belastungswerte der Werkzeuge umfassen, und wobei die Bahndaten-Erzeugungseinrichtung die Bahndaten mit der zusätzlichen Maßgabe erzeugt, dass ein oder mehrere Belastungswerte des vorgegebenen Werkzeugs bei Abfahren einer anhand der Bahndaten festgelegten Bearbeitungsbahn den oder die maximalen Belastungswerte des vorgegebenen Werkzeugs nicht überschreiten.

Dies hat den Vorteil, dass ein oder mehrere maximale Belastungswerte des vorgegebenen Werkzeugs bekannt sind, wobei dann die Bearbeitungsbahnen und die Bahndaten derart festgelegt werden können, dass der oder die maximalen Belastungswerte des vorgegebenen Werkzeugs bei Abfahren der Bearbeitungsbahn anhand der erzeugten Bahndaten nicht überschritten werden.

Vorzugsweise umfasst die Vorrichtung weiterhin eine Werkzeugbevorratungs-Erfassungseinrichtung zum Erfassen der Werkzeugbevorratung der Werkzeugmaschine, eine Werkzeugauswahlseinrichtung zum Auswählen eines Werkzeugs mit vergleichsweise hohem maximalen Zerspanvolumen in Abhängigkeit der momentanen Differenzgeometrie-Modelldaten als vorgegebenes Werkzeug für eine nächste Bearbeitungsbahn und eine Werkzeugwechsel-Festlegungseinrichtung zum Festlegen eines Werkzeugwechsels des bisher vorgegebenen Werkzeugs mit einem für die nächste Bearbeitungsbahn ausgewählten vorgegebenen Werkzeug in Abhängigkeit der erfassten Werkzeugbevorratung der Werkzeugmaschine, wobei die Werkzeugwechsel-Festlegungseinrichtung vorzugsweise einen Werkzeugwechsel festlegt, wenn für die nächste Bearbeitungsbahn ein anderes Werkzeug aus der Werkzeugbevorratung der Werkzeugmaschine als das bisher vorgegebene Werkzeug von der Werkzeugbestimmungseinrichtung als vorgegebenes Werkzeug für die nächste Bearbeitungsbahn ausgewählt wird.

Dies hat den Vorteil, dass die Werkzeugbevorratungssituation der Werkzeugmaschine erfasst werden kann, so dass die verfügbaren Werkzeuge und die dazugehörigen Werkzeugeigenschaften (z.B. das maximale Zerspanvolumen) bekannt sind. Somit kann das jeweilige Werkzeug als vorgegebenes Werkzeug ausgewählt werden, für das eine Bearbeitungsbahn und die dazugehörigen Bahndaten mit optimalem, also möglichst großem erreichbaren Zerspanvolumen entlang der Bahn festgelegt werden können. Weiterhin kann bei einer Bearbeitung in mehreren Bearbeitungsschritten zwischen zwei Bearbeitungsschritten das vorgegebene Werkzeug mit einem anderen Werkzeug ausgewechselt werden, wenn dies ein größeres Zerspanvolumen ermöglicht.

Vorzugsweise umfasst die Vorrichtung eine Werkzeugmaschinengeometrie-Modelldaten-Erzeugungseinrichtung zum Erzeugen von Werkzeugmaschinengeometrie-Modelldaten, die eine momentane Werkzeugmaschinengeometrie zu einem bestimmten Bearbeitungszeitpunkt des Werkstücks beschreiben, wobei die Werkzeugmaschinengeometrie vorzugsweise eine momentane Orientierung und Position des vorgegebenen Werkzeugs, von Elementen der Steuervorrichtung und von Einspannmitteln der Werkzeugmaschine zum Einspannen des Werkstücks umfasst. Hierbei werden dann die die Bahndaten vorzugsweise anhand der Werkzeugmaschinengeometrie-Modelldaten und/oder anhand eines Vergleichs der Werkzeugmaschinengeometrie-Modelldaten mit den Bearbeitungsgeometrie-Modelldaten zu dem bestimmten Bearbeitungszeitpunkt mit der zusätzlichen Maßgabe erzeugt, dass eine Kollision von Elementen der Werkzeugmaschine mit Elementen der Werkzeugmaschine und von Elementen der Werkzeugmaschine, außer des vorgegebenen Werkzeugs, mit dem Werkstück bei Abfahren der Bearbeitungsbahn durch das mindestens eine vorgegebene Werkzeug verhindert wird.

Dies hat den Vorteil, dass zusätzlich zu der Geometrie des Werkstücks auch eine momentane Geometrie der Werkzeugmaschine zu einem bestimmten Zeitpunkt während der Bearbeitung des Werkstücks bekannt ist oder bestimmt werden kann, wobei die momentane Werkzeugmaschinengeometrie speziell die momentane Lage und/oder Position beweglicher Elemente der Werkzeugmaschine, wie die Lage und/oder Position von Elementen der Steuervorrichtung oder von Einspannmitteln umfasst. Dadurch kann vorzugsweise auch eine relative Lage und/oder Position zwischen Elementen der Werkzeugmaschine mit anderen Elementen der Werkzeugmaschine, wie zum Beispiel zwischen Elementen der Steuervorrichtung mit Einspannmitteln bestimmt werden.

Weiterhin ergibt sich der Vorteil, dass ein Vergleichen der Werkzeugmaschinengeometrie mit der Bearbeitungsgeometrie des Werkstückes zu einem beliebigen Zeitpunkt während der Bearbeitung des Werkstücks ermöglicht wird. Somit kann eine relative Lage oder Position des eingespannten Werkstücks Elementen der Werkzeugmaschine, wie speziell beweglichen Elementen der Werkzeugmaschine, so zum Beispiel der Steuervorrichtung oder Einspannmitteln, bestimmt werden.

Weiterhin ergibt sich der Vorteil, dass durch einen Vergleich der momentanen Werkzeugmaschinengeometrie und der Bearbeitungsgeometrie des Werkstücks eine Bahnberechnung so durchgeführt werden kann, dass bei Abfahren der Bahn durch das vorgegebene Werkzeug keine Kollisionen zwischen Elementen der Werkzeugmaschine mit Elementen der Werkzeugmaschine und/oder mit dem eingespannten Werkstück stattfinden.

Somit können also nur Bahnen berechnet werden, die ein kollisionsfreies Abfahren der Bahn durch das vorgegebene Werkzeug ermöglichen. Speziell können Kollisionen zwischen Elementen der Steuervorrichtung mit Einspannmitteln und Kollisionen zwischen Elementen der Steuervorrichtung mit dem eingespannten Werkstück verhindert werden.

Vorzugsweise umfasst die Vorrichtung weiterhin eine Darstellungseinrichtung zum visuellen Darstellen eines virtuelles 3D-Modells der Rohteilgeometrie, eines virtuelles 3D-Modells der Bearbeitungsgeometrie, eines virtuelles 3D-Modells der der Fertigteilgeometrie, eines virtuelles 3D-Modells der der Differenzgeometrie und/oder eines virtuelles 3D-Modells der der Werkzeugmaschine.

Dies hat den Vorteil, dass zu jedem Zeitpunkt des Bearbeitungsvorgangs des Werkstücks an der Werkzeugmaschine die Rohteilgeometrie, Bearbeitungsgeometrie, Fertigteilgeometrie und/oder Differenzgeometrie des Werkstücks und/oder die Werkzeugmaschinengeometrie einem menschlichen Bediener zur Überprüfung angezeigt werden kann.

Vorzugsweise erzeugt die Bahndaten-Erzeugungseinrichtung die Bahndaten anhand einer Simulation der Bearbeitung eines virtuellen Werkstücks an einer virtuellen Werkzeugmaschine, wobei die Vorrichtung weiterhin vorzugsweise eine Bearbeitungssimulationseinrichtung zum Simulieren des Abfahrens einer anhand von durch die Bahndaten-Erzeugungseinrichtung erzeugten Bahndaten festgelegten Bearbeitungsbahn durch ein virtuelles vorgegebene Werkzeug umfasst.
Vorzugsweise erzeugt die Bearbeitungsgeometrie-Modelldaten-Erzeugungseinrichtung Bearbeitungsgeometrie-Modelldaten eines virtuellen 3D-Modells einer Bearbeitungsgeometrie des virtuellen Werkstücks, die einen virtuellen Abtragszustand des Werkstücks zu einem beliebigen Bearbeitungszeitpunkt beschreiben, nachdem das Abfahren einer ersten festgelegten Bearbeitungsbahn durch ein virtuelles vorgegebenes Werkzeug durch die Bearbeitungssimulationseinrichtung simuliert wurde.

Vorzugsweise stellt die Fertigteilgeometrie-Bereitstellungseinrichtung Fertigteilgeometrie-Modelldaten eines virtuellen 3D-Modells der Fertigteilgeometrie bereit, die eine Fertigteilgeometrie des virtuellen Werkstücks beschreiben, wobei die Differenzgeometrie-Modelldaten-Erzeugungseinrichtung vorzugsweise Differenzgeometrie-Modelldaten erzeugt, die eine Differenzgeometrie des Materials beschreiben, das zum Erreichen der Fertigteilgeometrie noch von dem virtuellen Werkstück abgetragen werden muss.

Vorzugsweise erzeugt die Bahndaten-Erzeugungseinrichtung zweite Bahndaten, die eine zweite Bearbeitungsbahn festlegen, anhand der Differenzgeometrie-Modelldaten mit der Maßgabe, dass das virtuelle vorgegebene Werkzeug bei Simulation des Abfahrens der zweiten Bearbeitungsbahn durch die Bearbeitungssimulationseinrichtung in Abhängigkeit eines maximalen Zerspanvolumens für das vorgegebene Werkzeug einen maximal großen Teil des Volumens der Differenzgeometrie des Werkstücks pro Zeiteinheit abträgt.

Dies hat den Vorteil, dass eine Bearbeitungsbahn und die dazugehörigen Bahndaten durch die Vorrichtung in einer Simulation einer virtuellen Werkzeugmaschine festgelegt werden können.

### Kurze Beschreibung der Zeichnungen

Fig. 1 zeigt eine schematische Darstellung einer Werkzeugmaschine.
Fig. 2 zeigt ein erstes Ausführungsbeispiel des erfindungsgemäßen Verfahrens zum Erzeugen von Steuerdaten.
Fig. 3a zeigt eine schematische Darstellung eines einfachen Beispiels einer Rohteilgeometrie.
Fig. 3b zeigt eine schematische Darstellung eines einfachen Beispiels einer Bearbeitungsgeometrie.
Fig. 3c zeigt eine schematische Darstellung eines einfachen Beispiels einer Fertigteilgeometrie.
Fig. 3d zeigt eine schematische Darstellung eines einfachen Beispiels einer Differenzgeometrie.
Fig. 4a zeigt eine schematische Darstellung eines einfachen Beispiels einer zweiten Bearbeitungsgeometrie.
Fig. 4b zeigt eine schematische Darstellung eines einfachen Beispiels einer zweiten Differenzgeometrie.
Fig. 5 zeigt ein zweites Ausführungsbeispiel des erfindungsgemäßen Verfahrens zum Erzeugen von Steuerdaten.
Fig. 6 zeigt ein drittes Ausführungsbeispiel des erfindungsgemäßen Verfahrens zum Erzeugen von Steuerdaten.
Fig. 7 zeigt eine Ausführungsform der erfindungsgemäßen Vorrichtung zum Erzeugen von Steuerdaten.

### Genaue Beschreibung der bevorzugten Ausführungsformen

Im Folgenden werden bevorzugte Ausführungsformen der vorliegenden Erfindung anhand der Figuren beschrieben.

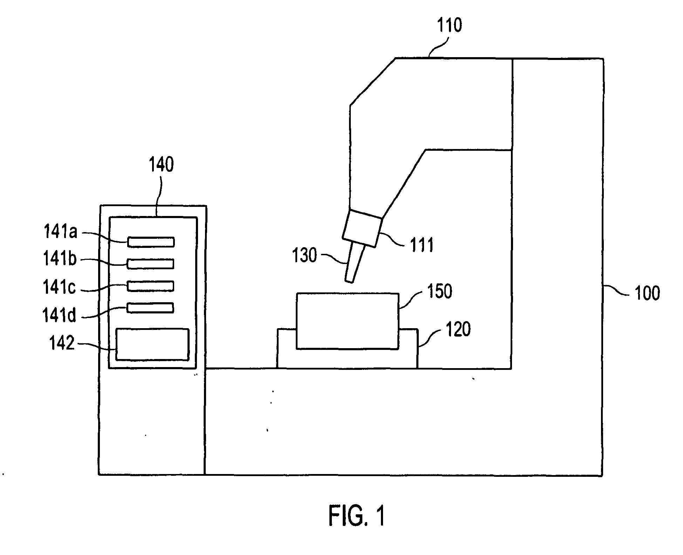

Fig. 1 zeigt eine schematische Darstellung einer Werkzeugmaschine 100 zum Bearbeiten eines eingespannten Werkstücks 150 von einem Rohteil in ein Fertigteil durch Zerspanen. Die Werkzeugmaschine 100 umfasst eine Steuervorrichtung 110, Einspannmittel 120, ein vorgegebenes Werkzeug 130 und ein Werkzeug-Magazin 140. Das Werkzeug-Magazin umfasst eine Mehrzahl von Werkzeugen 141a, 141b, 141c und 141d. Die Steuervorrichtung 110 ist mit dem vorgegebenen Werkzeug 130 ausgerüstet und ist derart gestaltet, dass die Steuervorrichtung 110 das vorgegebene Werkzeug 130 entlang einer festgelegten Bearbeitungsbahn zum Abtragen von Material des Werkstücks steuern kann. Das zu bearbeitende Werkstück 150 ist in dem Einspannmittel 120 eingespannt.

Das Werkzeug-Magazin 140 umfasst weiterhin eine Werkzeug-Wechselvorrichtung 142 zum Wechseln des vorgegebenen Werkzeugs 130, mit dem die Steuervorrichtung 110 ausgerüstet ist, mit einem der Werkzeuge 141a-d aus dem Werkzeug-Magazin 140. Somit kann die Steuervorrichtung mit jedem der Werkzeuge 141a-d und 130 ausgerüstet werden, so dass das Werkstück mit jedem der Werkzeuge 141a-d und 130 bearbeitet werden kann, nachdem die Steuervorrichtung 110 durch die Werkzeug-Wechselvorrichtung 142 mit dem jeweiligen Werkzeug ausgerüstet wurde.

Die verschiedenen Werkzeuge 141a-d und 130 an einer Werkzeugmaschine unterscheiden sich in spezifischen Werkzeugeigenschaften. Mögliche Werkzeugeigenschaften sind zum Beispiel das Material oder die Materialien des Werkzeugs, der Durchmesser und die Höhe des Werkzeugs, die Zahl der Schneiden des Werkzeugs, Belastungswerte des Werkzeugs und ein maximales Zerspanvolumen des jeweiligen Werkzeugs. Dabei hängt das maximale Zerspanvolumen des Werkzeugs hauptsächlich von den vorher genannten Eigenschaften ab.

Das Zerspanvolumen ist hierbei eine Kenngröße, die angibt, wie viel Material pro Zeit abgetragen wird. Eine gängige Einheit des Zerspanvolumens von Werkzeugen einer Werkzeugmaschine ist die Einheit cm³/min. Die Werkzeugeigenschaft der Höhe des Werkzeugs meint hier nicht die absolute Höhe des Werkzeugs, sondern eine Höhe des Werkzeugs, die zum Zerspanen von Material des Werkstücks benutzt werden kann und entspricht deshalb einer möglichen Zerspantiefe des Werkzeugs, d.h. der Tiefe, die ein Werkzeug in ein Werkstück zum Abtragen von Material eindringen kann. Das maximale Zerspanvolumen eines Werkzeugs kann weiterhin auch vom Material des Werkstücks abhängen.

Beim Abfahren einer festgelegten Bearbeitungsbahn durch das vorgegebene Werkzeug 130 durch das Werkstück 150 wird Material des Werkstücks 150 abgetragen. Hierbei wird ein tatsächliches Zerspanvolumen, auch gemessen in cm³/min, erreicht, das kleiner oder maximal gleich dem maximalen Zerspanvolumen des Werkzeugs ist. Das tatsächlich erreichte Zerspanvolumen beim Abfahren der festgelegten Bearbeitungsbahn durch das Werkstück 150 hängt von Faktoren, wie z.B. der Vorschubgeschwindigkeit des vorgegebenen Werkzeugs 130 entlang der festgelegten Bearbeitungsbahn durch das Werkstück 150, der Leistung der Spindel 111, die das vorgegebene Werkzeug 130 um eine Achse zur Erzeugung einer Schnittgeschwindigkeit rotiert, dem Material des Werkstücks 150, dem Material des Werkzeugs 130, dem Durchmesser und der Höhe sowie der Zahl der Schneiden des vorgegebenen Werkzeugs 130 und der Werkzeugorientierung des Werkzeugs 130 relativ zu dem eingespannten Werkstück 150 ab.

Bei der Werkzeugmaschine 100 handelt es sich um eine CNC-Werkzeugmaschine, d.h. die Steuervorrichtung 110 wird automatisch von in die Werkzeugmaschine 100 eingespeisten CNC-Steuerdaten gesteuert. Auf diese Weise wird das vorgegebene Werkzeug 130 anhand der CNC-Steuerdaten gesteuert.

Die Steuervorrichtung 110 der Werkzeugmaschine 100 ermöglicht das Steuern des Werkzeugs 130 relativ zu dem eingespannten Werkstück 150 mit einer dreidimensionalen, freien Werkzeugbewegung und einer freien Werkzeugorientierung um fünf Achsen. Dies umfasst drei Linearachsen, so dass das vorgegebene Werkzeug 130 in alle Richtungen dreidimensional bewegt werden kann. Die Linearachsen sind senkrecht zueinender angeordnet und ermöglichen jeweils eine lineare Bewegung der Werkzeugs, wobei durch gleichzeitige Bewegung der Linearachsen komplizierte Bahnverläufe ermöglicht werden. Weiterhin wird die freie Werkzeugorientierung relativ zu dem eingespannten Werkstück 150 durch zwei Rundachsen ermöglicht, wobei eine der Rundachsen eine schiefe Rotation des Werkzeugs ermöglicht (nicht zu verwechseln mit der Rotation zur Erzeugung einer Schnittgeschwindigkeit), und wobei die zweite Rundachse eine Rotation des Werkstücks 150 ermöglicht. Somit sind zusätzlich negative Winkel des Werkzeugs 130 relativ zu dem eingespannten Werkstück 150 möglich, so dass auch ein sogenannter Hinterschnitt ermöglicht wird.

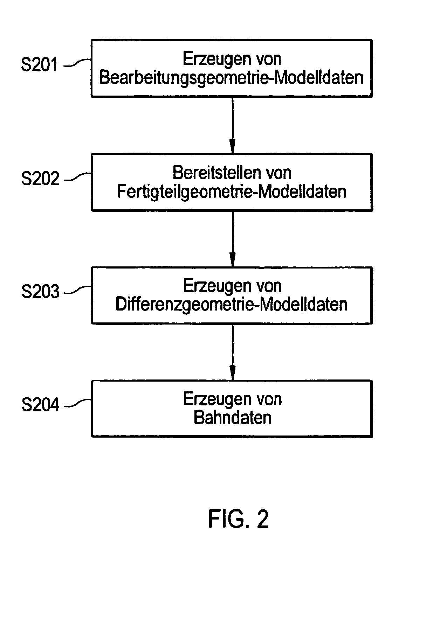

Eine erste Ausführungsform des Verfahrens zum Erzeugen von Steuerdaten nach der vorliegenden Erfindung ist in Fig. 2 dargestellt. Das Verfahren zum Erzeugen von Steuerdaten zum Steuern eines vorgegebenen Werkzeugs an einer Werkzeugmaschine zum Bearbeiten eines eingespannten Werkstücks 150 von einem Rohteil in ein Fertigteil durch Zerspanen umfasst die Schritte Erzeugen von Bearbeitungsgeometrie-Modelldaten S201, Bereitstellen von Fertigteilgeometrie-Modelldaten S202, Erzeugen von Differenzgeometrie-Modelldaten S203 und Erzeugen von Bahndaten S204.

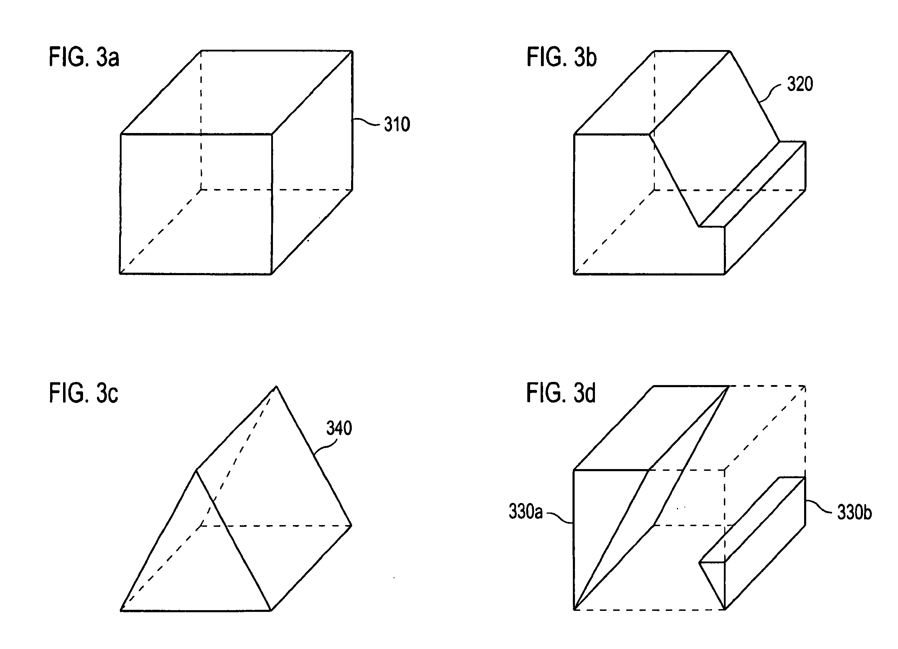

Eine Erläuterung der Begriffe Bearbeitungsgeometrie des Werkstücks, Fertigteilgeometrie des Werkstücks und Differenzgeometrie des Werkstücks soll im Folgenden anhand eines Ausführungsbeispiels unter Bezugnahme auf die Figuren 3a-d erfolgen. Fig. 3a zeigt als Beispiel eines Rohteils 310 einen Würfel, der das Rohteil des Werkstücks darstellt, wie es zu Beginn der Bearbeitung des Werkstücks in die Werkzeugmaschine 100 in den Einspannmitteln 120 eingespannt wird.

Fig. 3c zeigt beispielhaft ein Fertigteil 340, das durch zerspanende Bearbeitung des Rohteils 310 erreicht werden soll. Fig. 3b zeigt ein Beispiel einer möglichen ersten Zwischenzustandsgeometrie des Werkstücks zu einem ersten Bearbeitungszeitpunkt t₁, nachdem ein oder mehrere vorgegebene Werkzeuge 130 entlang einer oder mehrerer Bearbeitungsbahnen Material von der rechten oberen Seite des Rohteils 310 abgetragen haben. Dies stellt die Bearbeitungsgeometrie 320 zum ersten Bearbeitungszeitpunkt t₁ dar. Das noch abzutragende Material 330a und 330b vom ersten Zwischenzustand 320 zum Erreichen der Fertigteilgeometrie des Fertigteils 340 ergibt sich aus einem direkten Vergleich der Fertigteilgeometrie des Fertigteils 340 mit der Bearbeitungsgeometrie der ersten Bearbeitungsgeometrie 320 zum ersten Bearbeitungszeitpunkt t₁ und ist in Fig. 3d dargestellt.

Die so ermittelte Differenzgeometrie 330a, b entspricht genau dem Material, das noch durch Zerspanen abgetragen werden muss, bis das Fertigteil 340 erreicht ist. In Fig. 2 entspricht dies den Schritten S201 "Erzeugen von Bearbeitungsgeometrie-Modelldaten", S202 "Bereitstellen von Fertigteilgeometrie-Modelldaten" und S203 "Erzeugen von Differenzgeometrie-Modelldaten".

Zu einem bestimmten Bearbeitungszeitpunkt t₁ wird die Bearbeitungsgeometrie 320 eines Werkstücks im Zwischenzustand bestimmt und es werden Bearbeitungsgeometrie-Modelldaten erzeugt, die die Bearbeitungsgeometrie 320 zu einem ersten Bearbeitungszeitpunkt t₁ angeben. Im Schritt S202 "Bereitstellen von Fertigteilgeometrie-Modelldaten" werden die Modelldaten der Fertigteilgeometrie 340 bereitgestellt, wobei die Fertigteilgeometrie-Modelldaten die Geometrie des angestrebten Fertigteils angeben, d.h. die Geometrie des Werkstückes, wie sie nach der Bearbeitung durch ein oder mehrere der Werkzeuge 130 und/oder 141a-d als Fertigzustand angestrebt ist.

Das Vergleichen der Bearbeitungsgeometrie-Modelldaten mit den Fertigteilgeometrie-Modelldaten erfolgt im Schritt S203 "Erzeugen von Differenzgeometrie-Modelldaten", in denen die Modelldaten erzeugt werden, die die Differenzgeometrie 330a, 330b des Werkstücks zum ersten Bearbeitungszeitpunkt t₁ beschreiben, zu dem auch die Bearbeitungsgeometrie-Modelldaten erzeugt wurden.

Im nächsten Schritt S204 "Erzeugen von Bahndaten" wird eine Bearbeitungsbahn durch die Differenzgeometrie 330a, b des Werkstücks festgelegt, die durch das vorgegebene Werkzeug 130 zum Abtragen von Material des Werkstücks 150 durch Vorschub abgefahren werden soll. Weiterhin werden im Schritt S204 "Erzeugen von Bahndaten" weitere Bahndaten zu der festgelegten Bearbeitungsbahn erzeugt, die zusätzlich angeben, mit welcher Vorschubgeschwindigkeit und mit welcher Werkzeugorientierung relativ zu dem Werkstück das vorgegebene Werkzeug 130 die im Schritt S204 festgelegte Bearbeitungsbahn abfahren soll.

Erfindungsgemäß werden hierbei die Bearbeitungsbahn und die Bahndaten derart festgelegt bzw. erzeugt, dass das vorgegebene Werkzeug 130 beim Abfahren der in Schritt S204 festgelegten Bearbeitungsbahn in Abhängigkeit des maximalen Zerspanvolumens des vorgegebenen Werkzeugs 130 einen maximal großen Teil des Volumens der in Schritt S203 bestimmten Differenzgeometrie 330a, b des Werkstücks pro Zeiteinheit abträgt. Somit wird die Bearbeitungsbahn in Schritt S204 festgelegt und Bahndaten erzeugt, wobei die in Schritt S203 erzeugten Differenzgeometrie-Modelldaten berücksichtigt werden.

Die Bearbeitungsbahn wird dabei so durch die Differenzgeometrie 330a, b des vorgegebenen Werkstücks 150 festgelegt, dass ein möglichst großes tatsächliches Zerspanvolumen beim Abfahren der Bearbeitungsbahn durch das vorgegebene Werkzeug 130 erreicht wird. Bestenfalls wird hierbei das maximale Zerspanvolumen des vorgegebenen Werkzeugs 130 erreicht. Weiterhin wird die Bearbeitungsbahn so festgelegt, dass bei Abfahren der festgelegten Bearbeitungsbahn durch das vorgegebene Werkzeug 130 nur Volumen der bestimmen Differenzgeometrie 330a, b abgetragen wird. Das heißt, dass beim Abfahren der festgelegten Bearbeitungsbahn durch das vorgegebene Werkzeug 130 kein Material der Fertigteilgeometrie 340 abgetragen wird.

In Schritt S204 "Erzeugen von Bahndaten" wird die freie Werkzeugbewegung und die freie Werkzeugorientierung relativ zu dem Werkstück 150 genutzt, um die Vorschubrichtung, die Vorschubgeschwindigkeit und/oder die Werkzeugorientierung kontinuierlich anzupassen und zu ändern, um ein möglichst großes tatsächliches Zerspanvolumen beim Abfahren der Bearbeitungsbahn durch das vorgegebene Werkzeug 130 zu erreichen. Möglichst soll dabei das maximale Zerspanvolumen des vorgegebenen Werkzeugs erreicht werden.

Dies führt erfindungsgemäß, je nach Form der Differenzgeometrie zum ersten Bearbeitungszeitpunkt t₁ zu komplexen, krummlinigen Bahnverläufen, wobei Richtungsänderungen der Vorschubrichtung des vorgegebenen Werkzeugs 130 entlang der Bearbeitungsbahn jeweils so festgelegt werden, dass durch den Richtungswechsel ein möglichst großes tatsächliches Zerspanvolumen nach einer Richtungsänderung durch das vorgegebene Werkzeug 130 erreicht werden kann. Insbesondere wird die Bearbeitungsbahn so festgelegt, dass nach einer Richtungsänderung entlang der Bahn ein größeres Zerspanvolumen erreicht werden kann, als durch eine geradlinige Vorschubrichtung ohne Richtungsänderung.

Somit wird bei dem erfindungsgemäßen Verfahren nicht durch einfaches Hin- und Herbewegen des vorgegebenen Werkzeugs 130 entlang geradliniger Bahnen Schicht für Schicht des Werkstücks in Scheiben abgetragen, bis die Fertigteilgeometrie 340 erreicht ist, wie bei dem sogenannten Abzeilen des Stands der Technik. Im Gegensatz zum Abzeilen wird bei dem erfindungsgemäßen Abfahren der in Schritt S204 festgelegten Bearbeitungsbahn anhand der erzeugten Bahndaten eine Vorschubgeschwindigkeit, Bewegungsrichtung und Werkzeugorientierung relativ zu dem Werkstück 150 derart verändert, dass das tatsächlich erreichte Zerspanvolumen bei Abfahren der festgelegten Bearbeitungsbahn durch das vorgegebene Werkzeug 130 in Abhängigkeit der Gegebenheiten der Differenzgeometrie 330 a, b maximal ist.

Somit kann sichergestellt werden, dass während der Vorschubbewegung kontinuierlich Material abgetragen wird, d.h. die Zeitspanne in der sich das Werkzeug ohne Materialberührung durch die Luft bewegt, kann erheblich verkürzt werden. Darüber hinaus kann, indem die Bearbeitungsbahn anhand des maximalen Zerspanvolumens des vorgegebenen Werkzeugs festgelegt wird, sichergestellt werden, dass bei einer vorbestimmten Bahnlänge ein maximaler tatsächlicher Materialabtrag sichergestellt wird, der von der Differenzgeometrie und von dem maximalen Zerspanvolumen des vorgegebenen Werkzeugs abhängt.

Somit orientiert sich erfindungsgemäß das Festlegen der Bearbeitungsbahn und das Erzeugen der Bahndaten nicht nur an der Fertigteilgeometrie 340 des Werkstücks, sondern auch an der Differenzgeometrie 330a, b und an dem maximalen Zerspanvolumen. Hierdurch kann durch das erfindungsgemäße Verfahren zum Erzeugen von Steuerdaten die Bearbeitungszeit beim Bearbeiten des Werkstücks 150 von einem Rohteil in ein Fertigteil erheblich reduziert werden.

In einem zweiten Ausführungsbeispiel des Verfahrens zum Erzeugen von Steuerdaten nach der vorliegenden Erfindung werden hintereinander mehrere Bearbeitungsbahnen festgelegt, wobei immer nach Abfahren der festgelegten Bearbeitungsbahn durch das vorgegebene Werkzeug 130 und vor Festlegen einer weiteren Bearbeitungsbahn eine Differenzgeometrie zum momentanen Bearbeitungszustand bestimmt wird. Dies erfordert jeweils das Erzeugen von aktuellen Bearbeitungsgeometrie-Modelldaten zu einem aktuellen Bearbeitungszeitpunkt tₙ, die die Bearbeitung des Werkstücks 150 seit Erzeugen der vorherigen Bearbeitungsgeometrie-Modelldaten zum Bearbeitungszeitpunkt tₙ₋₁ erfasst, so dass die aktuelle Differenzgeometrie zum Bearbeitungszeitpunkt tₙ bestimmt werden kann.

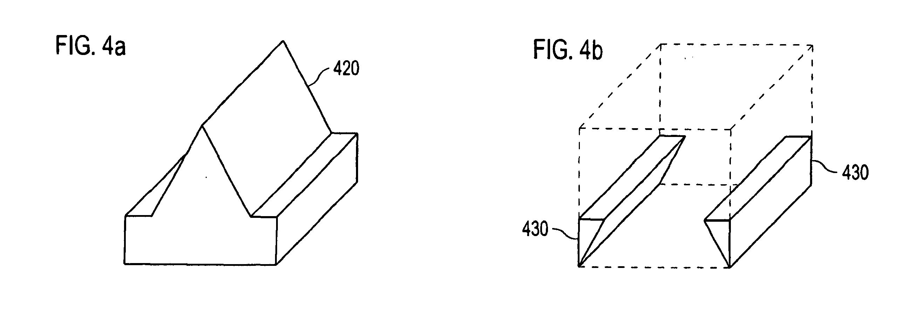

Bezug nehmend auf die einfachen Beispiele der Rohteilgeometrie, Bearbeitungsgeometrie, Differenzgeometrie und Fertigteilgeometrie in den Figuren 3a bis 3d mit einem Zwischenzustand des Werkstücks in einer Bearbeitungsgeometrie 320 zu einem ersten Bearbeitungszeitpunkt t₁ wird in Fig. 4a das Werkstück in einem zweiten Zwischenzustand mit einer Bearbeitungsgeometrie 420 zu einem zweiten Bearbeitungszeitpunkt t₂ beispielhaft dargestellt, wobei zwischen dem ersten Bearbeitungszeitpunkt t₁ und dem zweiten Bearbeitungszeitpunkt t₂ durch ein oder mehrere vorgegebene(s) Werkzeug(e) 130 entlang einer oder mehrerer Bearbeitungsbahn(en) Material vom Werkstück im linken oberen Teil abgetragen worden ist. Durch Vergleich der zweiten Bearbeitungsgeometrie 420 des Zwischenzustands zum zweiten Bearbeitungszeitpunkt t₂ mit der Fertigteilgeometrie 340 des Fertigteils ergibt sich eine neue momentane Differenzgeometrie 430a, b wie in Fig. 4b beispielhaft dargestellt. Anhand dieser Differenzgeometrie 430a, b wird eine zweite Bearbeitungsbahn festgelegt und zweite Bahndaten für die zweite Bearbeitungsbahn erzeugt.

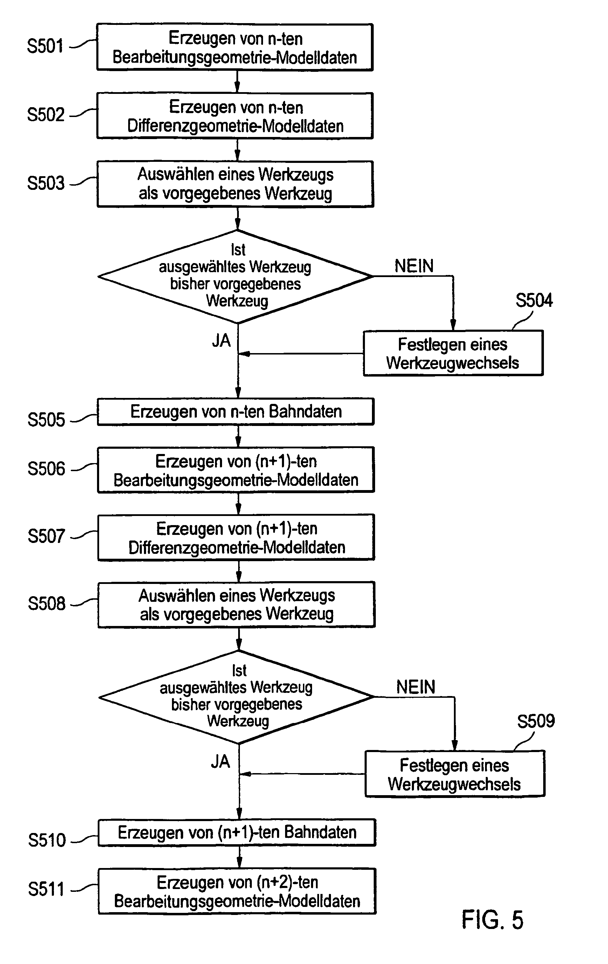

Die Abfolge von Verfahrenschritten der zweiten Ausführungsform des Verfahrens zum Erzeugen von Steuerdaten ist in Fig. 5 dargestellt. Zu einem Bearbeitungszeitpunkt tₙ werden im Schritt S501 "Erzeugen von n-ten Bearbeitungsgeometrie-Modelldaten" die Bearbeitungsgeometrie-Modelldaten eines Zwischenzustands zum Bearbeitungszeitpunkt tₙ erzeugt. Danach werden in Schritt S502 "Erzeugen von n-ten Differenzgeometrie-Modelldaten" die aktuellen Differenzgeometrie-Modelldaten anhand des Vergleichs der Fertigteilgeometrie mit der aktuellen Bearbeitungsgeometrie zu dem n-ten Bearbeitungszeitpunkt tₙ zum Erzeugen von n-ten Differenzgeometrie-Modelldaten verglichen.

Hierbei sind für den Vergleich der aktuellen Bearbeitungsgeometrie mit der Fertigteilgeometrie wieder Fertigteilgeometrie-Modelldaten erforderlich. In Fig. 5 dargestellt ist eine n-te Wiederholung der Abfolge der Bearbeitungsschritte S201 bis S204. In dem in Fig. 5 dargestellten Ausführungsbeispiel des Verfahrens ist kein Schritt Bereitstellen von Fertigteilgeometrie-Modelldaten vorgesehen, da angenommen ist, dass die Fertigteilgeometrie-Modelldaten in einer ersten Abfolge der Verfahrensschritte bereits bereitgestellt worden sind, so dass es ab der zweiten Abfolge, also der ersten Wiederholung der Verfahrensschritte, nicht mehr erforderlich ist, dass Fertigteilgeometrie-Modelldaten bereitgestellt werden müssen.

Im nächsten Schritt S503 "Auswählen eines Werkzeugs als vorgegebenes Werkzeug" wird ein Werkzeug als vorgegebenes Werkzeug ausgewählt. Hierbei ist das vorgegebene Werkzeug dasjenige Werkzeug, mit dem die Steuervorrichtung 110 ausgerüstet ist, so dass die Steuervorrichtung 110 das vorgegebene Werkzeug 130 durch das Werkstück 150 zum Abtragen von Material des Werkstücks 150 steuert. In einem weiteren hier nicht näher veranschaulichten Ausführungsbeispiel, in dem die Werkzeugmaschine 100 nur ein Werkzeug umfasst, und keine weiteren Werkzeuge 141a-d im Werkzeug-Magazin 140 enthalten sind, oder kein Werkzeug-Magazin 140 in der Werkzeugmaschine 100 enthalten ist, wird dieser Schritt S503 nicht ausgeführt.

Weiterhin ergeben sich an einer Werkzeugmaschine 100 mit einer Mehrzahl von Werkzeugen 141a-d in einem Werkzeug-Magazin 140 mit unterschiedlichen Werkzeugeigenschaften zwei wesentliche Möglichkeiten. Einerseits kann das als vorgegebenes Werkzeug für die n-te Bearbeitungsbahn ausgewählte Werkzeug gleich dem vorgegebenen Werkzeug für die (n-1)-te Bearbeitungsbahn sein. In diesem Fall ist kein Wechsel des Werkzeugs, mit dem die Steuervorrichtung 110 ausgerüstet ist, erforderlich. Im zweiten Falle wird im Schritt S503 ein Werkzeug als vorgegebenes Werkzeug für die n-te Bearbeitungsbahn ausgewählt, das nicht gleich dem für die (n-1)-te Bearbeitungsbahn vorgegebenen Werkzeug ist. In diesem Falle folgt der Schritt S504 "Festlegen eines Werkzeugwechsels", in dem ein Werkzeugwechsel festgelegt wird. Das heißt, es wird festgelegt, dass das Werkzeug, mit dem die Steuervorrichtung 110 ausgerüstet ist, durch ein als vorgegebenes Werkzeug ausgewähltes Werkzeug aus dem Werkzeug-Magazin 140 gewechselt wird. Hierfür umfasst die Werkzeugmaschine 100 die Werkzeug-Wechselvorrichtung 142 zum Wechseln des Werkzeugs 130 mit dem die Steuervorrichtung ausgerüstet ist.

Somit ist es möglich, während der Bearbeitung des Werkstücks 150 von einem Rohteil in ein Fertigteil das vorgegebene Werkzeug zu wechseln, je nach Begebenheiten des noch abzutragenden Materials des Werkstücks, das heißt abhängig von der aktuellen Differenzgeometrie des Werkstücks. In der Praxis ergibt sich dieser Fall zum Beispiel, wenn zuerst ein Werkzeug mit einem großen Durchmesser in die Steuervorrichtung 110 eingesetzt ist, um ein möglichst großes tatsächliches Zerspanvolumen zu erreichen, wobei ab einer bestimmten Differenzgeometrie zu einem bestimmten Bearbeitungszeitpunkt keine Bahn mehr festgelegt werden kann, in der das vorgegebene Werkzeug Material vom Werkstück abträgt, ohne die Fertigteilgeometrie des Werkstücks abzutragen. Es ist dann erforderlich, ein Werkzeug aus dem Werkzeug-Magazin 140 mit einem kleineren Durchmesser auszuwählen, und dieses Werkzeug mit dem bisher vorgegebenen Werkzeug mit dem großen Durchmesser auszuwechseln.

Im nächsten Schritt S505 "Erzeugen von n-ten Bahndaten" wird eine n-te Bearbeitungsbahn anhand erzeugter n-ter Bahndaten festgelegt, die das vorgegebene Werkzeug oder ein gegebenenfalls neues vorgegebenes Werkzeug zum Abtragen von Material der bestimmten momentanen Differenzgeometrie des Werkstücks zum Bearbeitungszeitpunkt tₙ durch Vorschub abfahren soll. Im Schritt S505 "Erzeugen von n-ten Bahndaten" werden hierbei n-te Bahndaten erzeugt, die angeben, mit welcher Vorschubgeschwindigkeit und mit welcher Werkzeugorientierung des vorgegebenen Werkzeugs relativ zu dem Werkstück das vorgegebene Werkzeug die festgelegte n-te Bearbeitungsbahn abfahren soll.

Erfindungsgemäß werden die n-ten Bahndaten anhand der bestimmten momentanen Differenzgeometrie zum Bearbeitungszeitpunkt tₙ erzeugt, so dass das für die n-te Bearbeitungsbahn vorgegebene Werkzeug beim Abfahren der n-ten Bearbeitungsbahn in Abhängigkeit des maximalen Zerspanvolumens des für die n-te Bearbeitungsbahn vorgegebenen Werkzeugs einen maximal großen Teil des Volumens der bestimmten n-ten Differenzgeometrie des Werkstücks pro Zeit abträgt.

Dies wird analog zu dem ersten Ausführungsbeispiel des Verfahrens zum Erzeugen von Steuerdaten mit den Schritten S201 bis S204 durchgeführt. Nach Abfahren der n-ten Bearbeitungsbahn durch das für die n-te Bearbeitungsbahn vorgegebene Werkzeug ergibt sich eine neue Bearbeitungsgeometrie, wobei im nächsten Schritt S506 "Erzeugen von (n+1)-ten Bearbeitungsgeometrie-Modelldaten" die (n+1)-ten Bearbeitungsgeometrie-Modelldaten zu der neuen momentanen Bearbeitungsgeometrie zum Bearbeitungszeitpunkt tₙ₊₁, nachdem das die n-te Bearbeitungsbahn vorgegebene Werkzeug die n-te Bearbeitungsbahn abgefahren hat und Material abgetragen hat, erzeugt werden.

Daraufhin folgen die Schritte S507 "Erzeugen von (n+1)-ten Differenzgeometrie-Modelldaten", S508 "Auswählen eines Werkzeugs als vorgegebenes Werkzeug", gegebenenfalls der Schritt S509 "Festlegen eines Werkzeugwechsels", falls das in Schritt S508 ausgewählte Werkzeug nicht gleich dem vorgegebenen Werkzeug für die n-te Bearbeitungsbahn ist, S510 "Erzeugen von (n+1)-ten Bahndaten", und S511 "Erzeugen von (n+2)-ten Bearbeitungsgeometrie-Modelldaten" für eine weitere (n+2)-te Bearbeitungsbahn.

Diese Wiederholung der Schritte in diesem Muster, bzw. dieser Abfolge S501 bis S511 erfolgt möglichst solange, bis eine im Schritt S511 bestimmte Bearbeitungsgeometrie des Werkstücks gleich der Fertigteilgeometrie des Werkstücks ist, so dass kein Material mehr vom Werkstück abgetragen werden muss, um die Fertigteilgeometrie zu erreichen.

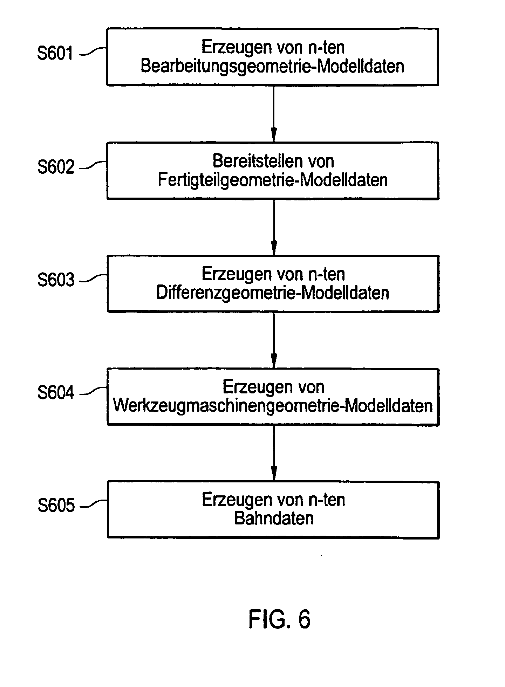

In einem dritten Ausführungsbeispiel des Verfahrens zum Erzeugen von Steuerdaten nach der vorliegenden Erfindung umfasst das Verfahren einen weiteren Schritt S604 "Erzeugen von Werkzeugmaschinengeometrie-Modelldaten". Wie in Fig. 6 dargestellt, umfasst das Verfahren dann die Schritte S601 "Erzeugen von n-ten Bearbeitungsgeometrie-Modelldaten", S602 "Bereitstellen von Fertigteilgeometrie-Modelldaten", S603 "Erzeugen von n-ten Differenzgeometrie-Modelldaten", S604 "Erzeugen von Werkzeugmaschinengeometrie-Modelldaten" und S605 "Erzeugen von Bahndaten für die n-te Bearbeitungsbahn".

Gegebenenfalls ist die Abfolge der Verfahrenschritte S601 bis S605 Teil einer Abfolge von Verfahrensschritten, in der, wie in dem zweiten Ausführungsbeispiel, die Schritte wiederholt werden, so dass wiederholt Bearbeitungsbahnen festgelegt werden. In diesem Fall kommt gegebenenfalls in einem weiteren Ausführungsbeispiel, wie in dem zweiten Ausführungsbeispiel, der Schritt S602 "Bereitstellen von Fertigteilgeometrie-Modelldaten" nicht vor, wenn die Fertigteilgeometrie-Modelldaten schon bereitstehen, da sie zum Festlegen einer ersten Bearbeitungsbahn bereitgestellt wurden.

Im Schritt S604 werden Werkzeugmaschinengeometrie-Modelldaten erzeugt, die eine momentane Werkzeugmaschinengeometrie zu einem bestimmten n-ten Bearbeitungszeitpunkt tₙ angeben, wobei die momentane Werkzeugmaschinengeometrie eine momentane relative Orientierung und relative Position des vorgegebenen Werkzeugs 130, von Elementen der Steuervorrichtung 110 und von dem Einspannmittel 120 der Werkzeugmaschine 100 zum Einspannen des Werkstücks 150 umfasst. Der n-te Bearbeitungszeitpunkt tₙ ist hierbei der Bearbeitungszeitpunkt, zu dem in Schritt S601 die n-ten Bearbeitungsgeometrie-Modelldaten erzeugt worden sind.

Im Schritt S605 "Erzeugen von n-ten Bahndaten" wird die n-te Bearbeitungsbahn derart festgelegt, dass eine Kollision von Elementen der Werkzeugmaschine 100 mit Elementen der Werkzeugmaschine 100 und von Elementen der Werkzeugmaschine 100, außer des vorgegebenen Werkzeugs 130 für die n-te Bearbeitungsbahn, mit dem Werkstück 150 bei Abfahren der n-ten Bearbeitungsbahn durch das für die n-te Bearbeitungsbahn vorgegebene Werkzeug 130 verhindert wird. Speziell wird die n-te Bearbeitungsbahn derart festgelegt, dass eine Kollision von Elementen der Steuervorrichtung 110 der Werkzeugmaschine 100 mit Elementen der Werkzeugmaschine 100, so zum Beispiel dem Einspannmittel 120, verhindert wird.

Weiterhin wird die n-te Bearbeitungsbahn derart festgelegt, dass eine Kollision von Elementen der Steuervorrichtung 110 mit dem eingespannten Werkstück 150 verhindert wird, so dass nur das vorgegebene Werkzeug 130 ausschließlich zum vorgegebenen Abtragen von Material in Kontakt mit dem Werkstück 150 kommt. Dies erfordert zusätzlich einen Vergleich der Werkzeugmaschinengeometrie-Modelldaten mit den Bearbeitungsgeometrie-Modelldaten des Werkstücks 150 zum bestimmten Bearbeitungszeitpunkt tₙ, so dass anhand des Vergleichs der Bearbeitungsgeometrie-Modelldaten und der Werkzeugmaschinengeometrie-Modelldaten die Position und Lage des eingespannten Werkstücks 150 durch Kenntnis der Position und Lage des Einspannmittels 120 relativ zu allen Elementen der Werkzeugmaschine 100, insbesondere zu Elementen der Steuervorrichtung 110, bekannt ist.

Somit wird im Schritt S605 jeweils nur eine Bearbeitungsbahn festgelegt, die von dem für die n-te Bearbeitungsbahn vorgegebenen Werkzeug derart abgefahren werden kann, ohne dass es zu einer unerwünschten Kollision von Elementen der Steuervorrichtung 110 mit Elementen des Einspannmittels 120, von Elementen der Steuervorrichtung 110 mit dem Werkstück, und von Elementen der Steuervorrichtung 110 mit Elementen der Werkzeugmaschine 100 kommt. Eine Kollision würde hierbei entstehen, wenn Elemente der Steuervorrichtung 110 mit Elementen der Werkzeugmaschine 100 oder mit dem Werkstück 150 derart zusammenstoßen oder in Kontakt kommen, dass ein weiteres Abfahren der Bearbeitungsbahn durch das vorgegebene Werkzeug 130 nicht möglich ist. Somit erfolgt die Bahnberechnung in diesem Ausführungsbeispiel mit einer zusätzlichen vorausschauenden Kollisionsprüfung.

Da in den Ausführungsbeispielen des Verfahrens zum Erzeugen von Steuerdaten nach der vorliegenden Erfindung Bearbeitungsbahnen festgelegt werden und Bahndaten derart erzeugt werden, dass ein möglichst großes tatsächliches Zerspanvolumen beim Abfahren der festgelegten Bearbeitungsbahn durch das vorgegebene Werkzeug 130 erreicht wird, werden in der Praxis Bearbeitungsbahnen festgelegt, die einen krummlinigen, komplizierten Verlauf durch die bestimmte Differenzgeometrie des Werkstücks aufweisen.

Beim Abfahren der festgelegten Bearbeitungsbahn wird somit die Orientierung des vorgegebenen Werkzeugs 130 relativ zu dem eingespannten Werkstück 150 entlang der Bahn, je nach Verlauf der Bearbeitungsbahn, in Abhängigkeit der bestimmten momentanen Differenzgeometrie, wie in den erzeugten Bahndaten angegeben, verändert. Weiterhin wird anhand der Bahndaten eine Vorschubgeschwindigkeit des vorgegebenen Werkzeugs 130 entlang der festgelegten Bearbeitungsbahn verändert, so dass in Abhängigkeit der Differenzgeometrie jeweils möglichst das maximale Zerspanvolumen des vorgegebenen Werkzeugs entlang der festgelegten Bearbeitungsbahn erreicht wird.

Dies führt weiterhin, neben der wechselnden Werkzeugorientierung, zu ständigen Änderungen der Vorschubgeschwindigkeit entlang einer festgelegten Bearbeitungsbahn. Hierbei entstehen Belastungen auf das vorgegebene Werkzeug, da bei Abfahren der festgelegten Bearbeitungsbahn Kräfte und Drehmomente auf das vorgegebene Werkzeug einwirken. So entsteht eine Beanspruchung des Werkzeugs, die erwartungsgemäß viel höher liegt als bei Verfahren nach dem bisherigen Stand der Technik. Es muss hierbei beachtet werden, dass die Vorschubwerte aller mindenstens fünf Achsen und die daraus resultierende Belastung auf das vorgegebene Werkzeug 130 additiv wirkt.

Somit ist es erforderlich, bei dem Festlegen einer Bearbeitungsbahn beziehungsweise bei dem Erzeugen der Bahndaten nur Bearbeitungsbahnen festzulegen und nur Bahndaten zu erzeugen, so dass eine Beanspruchung des vorgegebenen Werkzeugs, das heißt die Belastung durch Kräfte und Drehmomente beim Abfahren der festgelegten Bearbeitungsbahn in Abhängigkeit der erzeugten Bahndaten, eine maximal zulässige Beanspruchung bzw. einen oder mehrere maximale Belastungswerte des vorgegebenen Werkzeugs 130 nicht überschreitet.

Weiterhin werden Bearbeitungsbahnen festgelegt und Bahndaten erzeugt in Abhängigkeit zulässiger Leistungsparameter und/oder kinetischer Eigenschaften der Werkzeugmaschine 100. Das bedeutet, dass nur Bearbeitungsbahnen festgelegt werden und die dazugehörigen Bahndaten erzeugt werden, so dass zulässige Leistungsparameter der Werkzeugmaschine 100 nicht überschritten werden, und die kinetischen Eigenschaften der Werkzeugmaschine 100 berücksichtigt werden. Hierbei ist gemeint, dass nur Bearbeitungsbahnen festgelegt werden und dazugehörige Bahndaten erzeugt werden, die anhand der maximal zulässigen Leistungsparameter und der kinematischen Eigenschaften der Werkzeugmaschine 100 ermöglicht sind. Die Kinematik der Werkzeugmaschine 100 umfasst eine Orientierbarkeit und Beweglichkeit der Steuervorrichtung 100, Vorschubwerte der Linearachsen und/oder Rundachsenwerte (Vorschubwerte der Rundachsen).

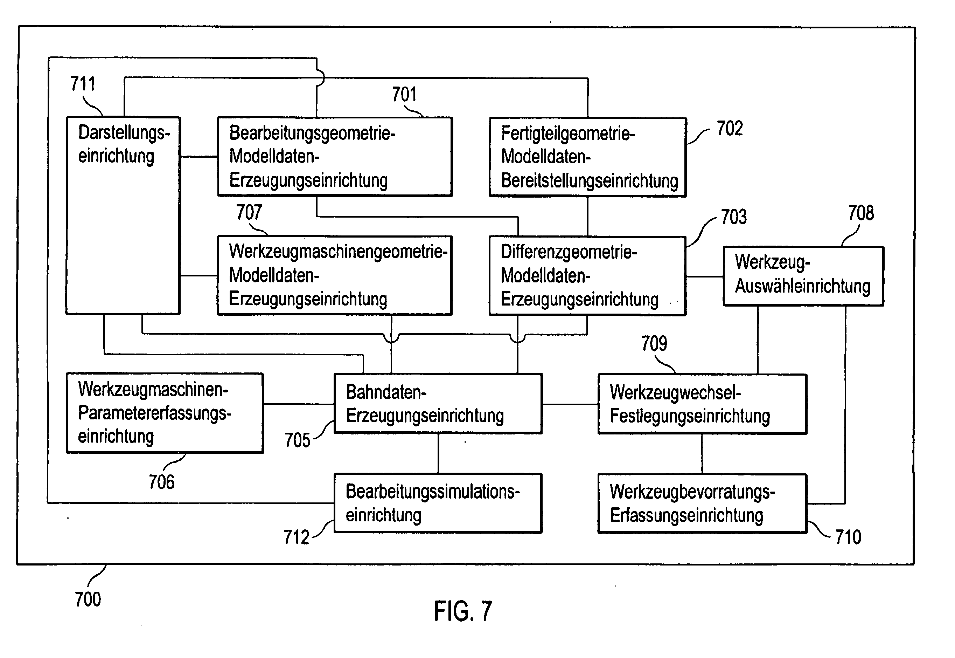

Fig. 7 zeigt eine Ausführungsform der Vorrichtung 700 zum Erzeugen von Steuerdaten nach einem der beschriebenen Ausführungsbeispiele des Verfahrens zum Erzeugen von Steuerdaten nach der vorliegenden Erfindung.

Die Vorrichtung 700 zum Erzeugen von Steuerdaten umfasst eine Bearbeitungsgeometrie-Modelldaten-Erzeugungseinrichtung 701 und eine Fertigteilgeometrie-Modelldaten-Bereitstellungseinrichtung 702. Weiterhin umfasst die Vorrichtung 700 eine Differenzgeometrie-Modelldaten-Erzeugungseinrichtung 703, die mit der Bearbeitungsgeometrie-Modelldaten-Erzeugungseinrichtung 701 und der Fertigteilgeometrie-Modelldaten-Erzeugungseinrichtung 702 verbunden ist. Die Vorrichtung 700 umfasst weiterhin eine Bahndaten-Erzeugungseinrichtung 705, wobei die Bahndaten-Erzeugungseinrichtung 705 mindestens mit der Differenzgeometrie-Modelldaten-Erzeugungseinrichtung 703 verbunden ist.

Die Bearbeitungsgeometrie-Modelldaten-Erzeugungseinrichtung 701 ist zum wiederholten Erzeugen von Bearbeitungsgeometrie-Modelldaten einer Bearbeitungsgeometrie des Werkstücks 150 zu einem beliebigen Bearbeitungszeitpunkt geeignet, wobei die Bearbeitungsgeometrie den momentanen Abtragungszustand des Werkstücks 150 zu diesem Bearbeitungszeitpunkt beschreibt.

Die Fertigteilgeometrie-Modelldaten-Bereitstellungseinrichtung 702 ist dazu geeignet Fertigteilgeometrie-Modelldaten bereitzustellen, wobei die Fertigteilgeometrie-Modelldaten die Geometrie des Fertigteils des Werkstücks 150 beschreiben, das nach Bearbeitung des Werkstücks 150 an der Werkzeugmaschine 100 in einem oder mehreren Bearbeitungsschritten erreicht werden soll.

Die Differenzgeometrie-Modelldaten-Erzeugungseinrichtung 703 ist dazu geeignet, die jeweiligen Bearbeitungsgeometrie-Modelldaten und die Fertigteilgeometrie-Modelldaten zu vergleichen und für eine jeweilige Bearbeitungsgeometrie des Werkstücks 150 zu einem bestimmten Bearbeitungszeitpunkt Differenzgeometrie-Modelldaten zu erzeugen, die eine momentane Differenzgeometrie des Werkstücks 150 zwischen der momentanen Bearbeitungsgeometrie und der Fertigteilgeometrie angeben.

Die Differenzgeometrie des Werkstücks zu dem bestimmten Bearbeitungszeitpunkt entspricht zu diesem Bearbeitungszeitpunkt genau der Geometrie des Materials des Werkstücks 150, das noch durch ein oder mehrere vorgegebene(s) Werkzeug(e) 130 von dem Werkstück 150 abgetragen werden muss, um die Fertigteilgeometrie des Werkstücks 150 zu erreichen.

Die Bahndaten-Erzeugungseinrichtung 705 ist dazu geeignet, eine Bearbeitungsbahn anhand der bestimmten momentanen Differenzgeometrie festzulegen, die ein vorgegebenes Werkzeug 130 zum Abtragen von Material der bestimmten momentanen Differenzgeometrie durch Vorschub abfahren soll. Die Bearbeitungsbahn wird erfindungsgemäß anhand der von der Differenzgeometrie-Modelldaten-Erzeugungseinrichtung 703 bestimmten aktuellen Differenzgeometrie des Werkstücks 150 festgelegt.

Die Bahndaten-Erzeugungseinrichtung 705 ist weiterhin dazu geeignet, Bahndaten anhand der erzeugten Differenzgeometrie-Modelldaten zu erzeugen, wobei die Bahndaten angeben, mit welcher Vorschubgeschwindigkeit und mit welcher Werkzeugorientierung des vorgegebenen Werkzeugs relativ zu dem Werkstück 150 das vorgegebene Werkzeug 130 eine festgelegte Bearbeitungsbahn abfahren soll.

Hierbei werden die Bahndaten durch die Bahndaten-Erzeugungseinrichtung 705 mit der Maßgabe erzeugt, dass das vorgegebene Werkzeug 130 beim Abfahren einer durch die Bahndaten festgelegten Bearbeitungsbahn in Abhängigkeit des maximalen Zerspanvolumens des vorgegebenen Werkzeugs 130 einen maximal großen Teil des Volumens der bestimmten momentanen Differenzgeometrie des Werkstücks 150 pro Zeiteinheit abträgt.

Weiterhin umfasst die Vorrichtung 700 zum Erzeugen von Steuerdaten eine Werkzeugmaschinen-Parametererfassungseinrichtung 706 zum Erfassen maximal zulässiger Leistungsparameter und/oder kinetischer Eigenschaften der Werkzeugmaschine 100. Die Werkzeugmaschinen-Parametererfassungseinrichtung 706 ist mindestens mit der Bahndaten-Erzeugungseinrichtung 705 verbunden, so dass die Bahndaten in Abhängigkeit der maximal zulässigen Leistungsparameter und/oder kinetischer Eigenschaften der Werkzeugmaschine 100 festgelegt werden.

Weiterhin umfasst die Vorrichtung 700 zum Erzeugen von Steuerdaten eine Werkzeugmaschinengeometrie-Modelldaten-Erzeugungseinrichtung 707 zum Erzeugen von Werkzeugmaschinengeometrie-Modelldaten, die eine momentane Werkzeugmaschinengeometrie zu einem beliebigen Bearbeitungszeitpunkt des Werkstücks 150 beschreiben. Die momentane Werkzeugmaschinengeometrie umfasst hierbei eine momentane relative Orientierung und relative Position des vorgegebenen Werkzeugs 130, von Elementen der Steuervorrichtung 110 und von Einspannmitteln 120 der Werkzeugmaschine 100 zum Einspannen des Werkstücks 150.

Die Werkzeugmaschinengeometrie-Modelldaten-Erzeugungseinrichtung 707 ist mindestens mit der Bahndaten-Erzeugungseinrichtung 705 verbunden, so dass die Bearbeitungsbahn und die dazugehörigen Bahndaten von der Bahndaten-Erzeugungseinrichtung 705 zusätzlich anhand der Werkzeugmaschinengeometrie-Modelldaten und/oder anhand eines Vergleichs der Werkzeugmaschinengeometrie-Modelldaten mit den Bearbeitungsgeometrie-Modelldaten festgelegt werden, so dass eine Kollision von Elementen der Werkzeugmaschine 100 mit Elementen der Werkzeugmaschine 100 und von Elementen der Werkzeugmaschine 100, außer des vorgegebenen Werkzeugs 130, mit dem Werkstück 150 bei Abfahren der festgelegten Bearbeitungsbahn durch das vorgegebene Werkzeug 150 verhindert wird.

Weiterhin umfasst die Vorrichtung 700 eine Werkzeug-Auswähleinrichtung 708, die mit der Bahndaten-Erzeugungseinrichtung 705 verbunden ist, wobei die Werkzeug-Auswähleinrichtung 708 zum wiederholten Auswählen eines Werkzeugs mit vergleichsweise hohem maximalen Zerspanvolumen in Abhängigkeit der momentanen Differenzgeometrie-Modelldaten als vorgegebenes Werkzeug geeignet ist. Hierfür ist die Werkzeug-Auswähleinrichtung 708 mit einer Werkzeugbevorratungs-Erfassungseinrichtung 710 und einer Werkzeugwechsel-Festlegungseinrichtung 709 verbunden.

Die Werkzeugbevorratungs-Erfassungseinrichtung 710 erfasst die Werkzeugbevorratung der Werkzeugmaschine 100. Dies bedeutet, dass die Werkzeugbevorratungs-Erfassungseinrichtung 710 die Bevorratung an Werkzeugen 141a-d und 130 an der Werkzeugmaschine 100 erfasst, und ebenfalls die Eigenschaften der jeweiligen Werkzeuge 141a-d und 130 erfasst, so dass die Werkzeugbevorratungs-Erfassungseinrichtung 710 alle Werkzeuge 141 und 130 erfasst, die von der Werkzeug-Auswähleinrichtung 708 als vorgegebenes Werkzeug 130 bestimmt werden können, wobei die Werkzeugbevorratungs-Erfassungseinrichtung 710 zusätzlich das jeweilige maximale Zerspanvolumen und/oder den oder die maximalen Belastungswerte der jeweiligen Werkzeuge erfasst.

Somit kann die Werkzeug-Auswähleinrichtung 708 ein Werkzeug als vorgegebenes Werkzeug 130 in Abhängigkeit des maximalen Zerspanvolumens dieses Werkzeugs bestimmen. Die Werkzeugwechsel-Festlegungseinrichtung 709 erfasst das bisher vorgegebene Werkzeug 130 an der Werkzeugmaschine, das heißt das Werkzeug, mit dem die Steuervorrichtung 110 der Werkzeugmaschine ausgerüstet ist. In einem Fall, in dem die Werkzeug-Auswähleinrichtung 708 ein Werkzeug als vorgegebenes Werkzeug 130 für eine weitere Bearbeitungsbahn auswählt, wobei dieses vorgegebene Werkzeug 130 ein anderes als das bisher in der Steuervorrichtung 110 der Werkzeugmaschine 100 ausgerüstete Werkzeug ist, dann legt die Werkzeugwechsel-Festlegungseinrichtung 709 einen Werkzeugwechsel fest, so dass das Werkzeug, mit dem die Steuervorrichtung 110 der Werkzeugmaschine 100 ausgerüstet ist, durch das für die nächste Bearbeitungsbahn festgelegte vorgegebene Werkzeug 130 ausgewechselt wird.

Ein derartiger Werkzeugwechsel ist zum Beispiel erforderlich, wenn noch Material von dem Werkstück 150 abgetragen werden muss, aber die Differenzgeometrie derart beschaffen ist, dass mit dem bisherigen vorgegebenen Werkzeug 130 keine weitere Bearbeitungsbahn mehr derart festgelegt werden kann, dass von der Differenzgeometrie Material abgetragen wird, ohne die Fertigteilgeometrie zu verletzen.

Weiterhin umfasst die Vorrichtung 700 zum Erzeugen von Steuerdaten eine Darstellungseinrichtung 711 zum visuellen Darstellen eines virtuellen 3D-Modells der Rohteilgeometrie, Bearbeitungsgeometrie, Fertigteilgeometrie, Differenzgeometrie oder Werkzeugmaschinengeometrie anhand der jeweiligen Modelldaten. Die Darstellungseinrichtung 711 kann hierbei die einzelnen virtuellen 3D-Modelle visuell darstellen, oder mehrere der durch die Modelldaten angegebenen Geometrien gleichzeitig. Weiterhin ermöglicht die Darstellungseinrichtung 711 das visuelle Darstellen einer festgelegten Bearbeitungsbahn durch die Differenzgeometrie des Werkstücks. Hierdurch wird es einem manuellen Bediener der Werkzeugmaschine 100 oder der Vorrichtung 700 ermöglicht, die erzeugten Steuerdaten, die festgelegten Bearbeitungsbahnen, die erzeugten Steuerdaten oder auch die Bearbeitungszustände des Werkstücks visuell nachzuvollziehen oder zu prüfen.

In einem Ausführungsbeispiel der Vorrichtung 700 zum Erzeugen von Steuerdaten nach der vorliegenden Erfindung ist die Vorrichtung 700 über eine Schnittstelle direkt mit der Werkzeugmaschine 100 verbunden. Die Vorrichtung 700 erzeugt hierbei die Steuerdaten nach einem der Ausführungsbeispiele der Verfahren zum Erzeugen von Steuerdaten nach der vorliegenden Erfindung direkt während der Bearbeitung des Werkstücks 150 an der Werkzeugmaschine 100. Dies bedeutet, dass die Bahndaten-Erzeugungseinrichtung 705 Bahndaten erzeugt, die dann sofort an die Steuervorrichtung 110 der Werkzeugmaschine 100 weitergegeben werden, so dass die Steuervorrichtung 110 das vorgegebene Werkzeug 130 direkt entlang der festgelegten Bearbeitungsbahn anhand der erzeugten Bahndaten steuert und Material vom Werkstück 150 abträgt.

Nach Abfahren der festgelegten Bearbeitungsbahn durch das vorgegebene Werkzeug 130 ergibt sich eine neue Bearbeitungsgeometrie des Werkstücks. Diese wird von der Bearbeitungsgeometrie-Modelldaten-Erzeugungseinrichtung 701 durch die erzeugten Bearbeitungsgeometrie-Modelldaten angegeben. Die Vorrichtung 700 erzeugt dann für den nächsten Bearbeitungsschritt Steuerdaten, wenn die Bearbeitungsgeometrie noch nicht der angestrebten Fertigteilgeometrie entspricht. Dafür werden wieder Differenzgeometrie-Modelldaten der momentanen Bearbeitungsgeometrie erzeugt, so dass wieder eine weitere Bearbeitungsbahn mit den dazugehörigen Bahndaten festgelegt werden kann.

Gegebenenfalls initiiert die Werkzeugwechsel-Festlegungseinrichtung 709 einen tatsächlichen Werkzeugwechsel, in dem das bisher in der Steuervorrichtung 110 ausgerüstete Werkzeug 130 mit einem anderen, aus dem Werkzeug-Magazin 140 stammenden Werkzeug 141a-d gewechselt wird, sofern die Werkzeug-Auswähleinrichtung 708 ein anderes als das vorgegebene Werkzeug 130 als für die nächste Bearbeitungsbahn vorgegebenes Werkzeug 130 auswählt. Nach erfolgtem Werkzeugwechsel an der Werkzeugmaschine 100 wird eine weitere Bearbeitungsbahn festgelegt indem Bahndaten durch die Bahndaten-Erzeugungseinrichtung 705 erzeugt werden. Dies geschieht erfindungsgemäß anhand der aktuellen bestimmten Differenzgeometrie mit der Maßgabe, ein möglichst großes tatsächliches Zerspanvolumen beim Abfahren des neuen vorgegebenen Werkzeugs 130 entlang der festgelegten Bearbeitungsbahn zu erreichen, wobei möglichst das maximale Zerspanvolumen des vorgegebenen Werkzeug 130 erreicht werden soll.
Die Bahndaten werden über die Schnittstelle direkt an die Werkzeugmaschine 100 weitergegeben, so dass die Werkzeugmaschine 100 anhand der erzeugten Steuerdaten das vorgegebene Werkzeug 130 mit der Steuervorrichtung 110 entlang der festgelegten Bearbeitungsbahn anhand der erzeugten Bahndaten steuert, so dass Material von dem Werkstück 150 abgetragen wird. Dies kann entsprechend dem zweiten Ausführungsbeispiel des Verfahrens zum Erzeugen von Steuerdaten nach der vorliegenden Erfindung wiederholt werden, bis das Fertigteil, bzw. die Fertigteilgeometrie des Werkstücks 150 erreicht ist.

Die hohe zu berücksichtigende Datenmenge an erzeugten Modelldaten, Technologieinformationen und maschinenspezifischen Daten führt zu einem derartigen Datenaufkommen, dass eine derartige "Online-Lösung", in der die Vorrichtung 700 zum Erzeugen von Steuerdaten direkt mit der Werkzeugmaschine 100 verbunden ist, zum Steuern der Werkzeugmaschine 100 während der Bearbeitung des Werkstücks 150 in Anbetracht der heutigen Computer-Rechenleistung erschwert ist.

Aus diesem Grund wird die Vorrichtung 700 zum Erzeugen von Steuerdaten in einer weiteren Ausführungsform der vorliegenden Erfindung nicht mit einer tatsächlichen Werkzeugmaschine 100, sondern mit einer Simulationsvorrichtung zur Simulation einer virtuellen Werkzeugmaschine über eine Schnittstelle verbunden. Eine derartige Simulationseinrichtung für eine virtuelle Werkzeugmaschine, die geeignet ist, eine Simulation einer Bearbeitung eines Werkstücks an einer Werkzeugmaschine zu simulieren, ist zum Beispiel aus DE 10 2006 043390 A1 des Anmelders bekannt.

Hierbei wird durch Simulation der Bearbeitung des Werkstücks an einer Werkzeugmaschine durch virtuelle Bearbeitung eines virtuellen Werkstücks an einer virtuellen Werkzeugmaschine durch Simulation in iterativer Annäherung an das Optimum durch Durchlaufen und Auswerten von Simulationsläufen an einer virtuellen Werkzeugmaschine, die alle für die Bearbeitungsprozesssteuerung notwendigen Eigenschaften enthält, eine Bearbeitungsbahn oder eine Abfolge von Bearbeitungsbahnen und gegebenenfalls Werkzeugwechseln festgelegt indem entsprechende Bahndaten erzeugt werden.

Das Optimum meint hierbei eine Bearbeitungsbahn oder eine Abfolge von Bearbeitungsbahnen und dazugehörigen Bahndaten, wobei die Bearbeitungsbahn und die Bahndaten nach dem Verfahren nach der vorliegenden Erfindung derart festgelegt sind, so dass die Bearbeitungszeit des Werkstücks aufgrund der gewählten oder festgelegten Bearbeitungsbahnen optimal reduziert ist.

In diesem Ausführungsbeispiel umfasst die Vorrichtung 700 zusätzlich eine Bearbeitungssimulationseinrichtung 712 zum Simulieren des Abfahrens einer anhand von durch die Bahndaten-Erzeugungseinrichtung 705 erzeugten Bahndaten festgelegten Bearbeitungsbahn durch ein virtuelles vorgegebene Werkzeug, wobei die Bearbeitungsgeometrie-Modelldaten-Erzeugungseinrichtung 701 Bearbeitungsgeometrie-Modelldaten eines virtuellen 3D-Modells einer Bearbeitungsgeometrie des virtuellen Werkstücks erzeugt, die einen virtuellen Abtragszustand des Werkstücks zu einem Bearbeitungszeitpunkt beschreiben, nachdem das Abfahren einer ersten festgelegten Bearbeitungsbahn durch ein virtuelles vorgegebenes Werkzeug durch die Bearbeitungssimulationseinrichtung 712 simuliert wurde.

Die Fertigteilgeometrie-Bereitstellungseinrichtung 702 stellt Fertigteilgeometrie-Modelldaten eines virtuellen 3D-Modells der Fertigteilgeometrie bereit, die eine Fertigteilgeometrie des virtuellen Werkstücks beschreiben, wobei die Differenzgeometrie-Modelldaten-Erzeugungseinrichtung 703 anhand eines Vergleichs der Fertigteilgeometrie-Modelldaten und der Bearbeitungsgeometrie-Modelldaten aktuelle Differenzgeometrie-Modelldaten erzeugt, die eine Differenzgeometrie des Materials beschreiben, das zum Erreichen der Fertigteilgeometrie noch von dem virtuellen Werkstück abgetragen werden muss.

Die Bahndaten-Erzeugungseinrichtung 705 erzeugt anhand der Differenzgeometrie-Modelldaten Bahndaten, die eine Bearbeitungsbahn festlegen mit der Maßgabe, dass das virtuelle vorgegebene Werkzeug bei Simulation des Abfahrens der zweiten Bearbeitungsbahn durch die Bearbeitungssimulationseinrichtung in Abhängigkeit eines maximalen Zerspanvolumens für das vorgegebene Werkzeug einen maximal großen Teil des Volumens der Differenzgeometrie des Werkstücks pro Zeiteinheit abträgt.

In diesem Ausführungsbeispiel umfasst die Vorrichtung 700 oder die virtuelle Werkzeugmaschine, die mit der Vorrichtung 700 zum Erzeugen von Steuerdaten verbunden ist, ein Speichermittel zum Speichern der erzeugten Steuerdaten, der festgelegten Bearbeitungsbahnen, der dazugehörigen Bahndaten und gegebenenfalls der festgelegten Werkzeugwechsel. Diese Daten können dann, nach fertig gestellter Simulation, an eine tatsächliche Werkzeugmaschine übertragen werden, so dass diese Werkzeugmaschine anhand der Steuerdaten ein tatsächliches Werkstück mit einem tatsächlichen vorgegebenen Werkzeug anhand der Steuerdaten bearbeiten kann.

Die hier aufgeführten Ausführungsbeispiele und Zeichnungen sind rein illustrativ und nicht beschränkend aufzufassen. Es ist möglich, die in den Ausführungsbeispielen beschriebenen Merkmale in abweichender Weise miteinander zu kombinieren, um auf diese Weise weitere Ausführungsbeispiele bereitzustellen, die für den entsprechenden Anwendungszweck optimiert sind. Soweit derartige Modifikationen für den Fachmann ohne Weiteres ersichtlich sind, sollen sie durch die obige Beschreibung der Ausführungsbeispiele implizit offenbart sein.

Beispielsweise wurde die in Fig. 7 dargestellte Vorrichtung 700 zum Erzeugen von Steuerdaten mit vielen technischen Merkmalen beschrieben, die optional sind. Zum Beispiel benötigt eine Vorrichtung 700 zum Erzeugen von Steuerdaten nach dem ersten Ausführungsbeispiel des Verfahrens zum Erzeugen von Steuerdaten nur eine Bearbeitungsgeometrie-Modelldaten-Erzeugungseinrichtung 701, eine Fertigteilgeometrie-Modelldaten-Erzeugungseinrichtung 702, eine Differenzgeometrie-Modelldaten-Erzeugungseinrichtung 703 und eine Bahndaten-Erzeugungseinrichtung 705. Alle weiteren Einrichtungen der Vorrichtung 700, wie in Fig. 7 beschrieben, sind für dieses erste Ausführungsbeispiel des Verfahrens zum Erzeugen von Steuerdaten optional.

## Patentansprüche

1. Verfahren zum Erzeugen von Steuerdaten zum Steuern eines vorgegebenen Werkzeugs (130) an einer Werkzeugmaschine (100) zum Bearbeiten eines eingespannten Werkstücks (150) von einem Rohteil in ein Fertigteil durch Zerspanen, wobei die Werkzeugmaschine (100) eine Steuervorrichtung zum Steuern eines vorgegebenen Werkzeugs (130) umfasst, die das Steuern des vorgegebenen Werkzeugs (130) relativ zu dem eingespannten Werkstück (150) mit einer dreidimensionalen freien Werkzeugbewegung und einer freien Werkzeugorientierung um mindestens 5 Achsen ermöglicht, umfassend die Schritte:
- Erzeugen (S201) von Bearbeitungsgeometrie-Modelldaten einer Bearbeitungsgeometrie (320) des Werkstücks (150), die den Abtragszustand des Werkstücks (150) zu einem bestimmten Bearbeltungszeitpunkt beschreiben,
- Bereitstellen (S202) von Fertigteilgeometrie-Modelldaten, die eine Fertigteilgeometrie (340) des Werkstücks (150) beschreiben,
- Erzeugen (S203) von Differenzgeometrie-Modelldaten, die eine Differenzgeometrie (330a, 330b) des Materials beschreiben, das zum Erreichen der Fertigteilgeometrie (340) noch abgetragen werden muss, und
- Erzeugen (S204) von Bahndaten, die angeben, welche Bearbeitungsbahn das vorgegebenes Werkzeug (130) mit welcher Vorschubgeschwindigkeit und welcher Werkzeugorientierung relativ zur dem Werkstück (150) abfahren soll, anhand der Differenzgeometrie-Modelldaten,
**dadurch gekennzeichnet, dass**
die Bahndaten derart erzeugt werden, dass das vorgegebene Werkzeug (130) beim Abfahren der anhand der Differenzgeometrie (330a, 330b) festgelegten. Bearbeitungsbahn die Vorschubrichtung und die Orientierung relativ zu dem eingespannten Werkstück (150) in Abhängigkeit von der Differenzgeometrie (330a, 330b) ändert, unter der Maßgabe, dass das vorgegebene Werkzeug (130) in Abhängigkeit eines maximalen Zerspanvolumens für das vorgegebene Werkzeug (130) beim Abfahren der Bearbeitungsbahn einen maximal großen Teil des Volumens der Differenzgeometrie (330a, 330b) des Werkstücks (150) pro Zeiteinheit abträgt.

2. Verfahren nach Anspruch 1, **gekennzeichnet durch** ein- oder mehrfaches Wiederholen der Schritte
- Erzeugen von Bearbeitungsgeometrie-Modelldaten,
- Erzeugen von Differenzgeometrie-Modelldaten, und
- Erzeugen von Bahndaten anhand der Differenzgeometrie-Modelldaten in dieser Reihenfolge,
wobei mindestens zweite Bearbeitungsgeometrie-Modelldaten einer zweiten Bearbeitungsgeometrie des Werkstücks und zweite Diffferenzgeometrie-Modelldaten zu einem bestimmten zweiten Bearbeitungszeitpunkt, nachdem das für eine erste Bearbeitungsbahn vorgegebene Werkzeug (130) die erste Bearbeitungsbahn anhand von ersten Bahndaten abgefahren hat, bei einer ersten Wiederholung der Schritte erzeugt werden, und anhand der zweiten Differenzgeometrie-Modelldaten zweite Bahndaten mit der Maßgabe erzeugt werden, dass ein für eine zweite Bearbeitungsbahn vorgegebenes Werkzeug (130) beim Abfahren der zweiten Bearbeitungsbahn in Abhängigkeit eines maximalen Zerspanvolumens dieses vorgegebenen Werkzeugs (130) einen maximal großen Teil des Volumens der bestimmten zweiten Differenzgeometrie des Werkstücks (150) pro Zeiteinheit abträgt.

3. Verfahren nach Anspruch 2, weiterhin **gekennzeichnet durch** ein- oder mehrfaches Wiederholen der Schritte
- Bereitstellen von Werkzeugbevorratungsdaten, die die Werkzeugbevorratung der Werkzeugmaschine (100) beschreiben und die angeben, welche Werkzeugeigenschaften die Werkzeuge der Werkzeugbevorratung Werkzeugmaschine haben, und
- Auswählen eines Werkzeugs mit vergleichsweise hohem maximalen Zerspanvolumen in Abhängigkeit der Differenzgeometrie-Modelldaten als vorgegebenes Werkzeug für eine nächste Bearbeitungsbahn, und gegebenenfalls ein- oder mehrfaches Wiederholen eines Schritts
- Festlegen (S504; S509) eines Werkzeugwechsels eines bisher vorgegebenen Werkzeugs (130) mit einem für eine nächste Bearbeitungsbahn ausgewählten Werkzeug in Abhängigkelt der Werkzeugbevorratung der Werkzeugmaschine (100).

4. Verfahren nach einem der Ansprüche 1 bis 3, **dadurch gekennzeichnet, dass** die Bahndaten zusätzlich in Abhängigkeit von Leistungsparametern und/oder kinetischen Eigenschaften der Werkzeugmaschine (100) derart erzeugt werden, dass die maximalen Leistungsparameter und/oder kinetischen Eigenschaften der Werkzeugmaschine bei Abfahren einer anhand der Bahndaten festgelegten Bearbeitungsbahn durch ein vorgegebenes Werkzeug (130) nicht überschritten werden.

5. Verfahren nach einem der Ansprüche 1 bis 4, **dadurch gekennzeichnet, dass** die Bahndaten zusätzlich in Abhängigkeit eines oder mehrerer maximaler Belastungswerte des mindestens einen vorgegebenen Werkzeugs (130) derart erzeugt werden, dass eine Belastung des vorgegebenen Werkzeugs (130) bei Abfahren einer anhand der Bahndaten festgelegten Bearbeitungsbahn den oder die maximalen Belastungswerte des vorgegebenen Werkzeugs (130) nicht überschreitet.

6. Verfahren nach einem der Ansprüche 1 bis 5, **gekennzeichnet durch** ein - oder mehrfaches Wiederholen eines Schritts Erzeugen (S604) von Werkzeugmaschinengeometrie-Modelldaten, die eine Werkzeugmaschinengeometrie zu einem bestimmten Bearbeitungszeitpunkt des Werkstücks (150) beschreiben, wobei die Werkzeugmaschinengeometrie eine relative Orientierung und relative Position des vorgegebenen Werkzeugs (130), von Elementen der Steuervorrichtung und von Einspannmitteln (120) der Werkzeugmaschine zum Einspannen des Werkstücks (150) umfasst,
wobei die Bahndaten zusätzlich anhand der Werkzeugmaschinengeometrie-Modelldaten und/oder anhand eines Vergleichs der Werkzeugmaschinengeometrie-Modelldaten mit den Bearbeitungsgeometrie-Modelldaten zu dem bestimmten Bearbeltungszeltpunkt mit der Maßgabe erzeugt werden, dass eine Kollision von Elementen der Werkzeugmaschine (100) mit Elementen der Werkzeugmaschine (100) und von Elementen der Werkzeugmaschine (100), außer des vorgegebenen Werkzeugs (130), mit dem Werkstück (150) bei Abfahren einer anhand der erzeugten Bahndaten festgelegten Bearbeitungsbahn **durch** das vorgegebene Werkzeug (130) verhindert wird.

7. Verfahren nach einem der Ansprüche 1 bis 6, **dadurch gekennzeichnet, dass** die Modelldaten geeignet sind, ein virtuelles 3D-Modell der Rohteilgeometrie, der Bearbeitungsgeometrie, der Fertigteilgeometrie, der Differenzgeometrie und/oder der Werkzeugmaschine (100) zu erzeugen.

8. Verfahren nach Anspruch 7, **dadurch gekennzeichnet, dass** die Bahndaten anhand einer Simulation der Bearbeitung eines virtuellen Werkstücks an einer virtuellen Werkzeugmaschine erzeugt werden, wobei die Simulation die folgenden Schritte umfasst
- Erzeugen eines virtuellen 3D-Modells des Werkstücks im Rohzustand,
- Erzeugen von ersten Bahndaten einschließlich Festlegen einer ersten Bearbeitungsbahn für ein virtuelles vorgegebenes Werkzeug,
- Simulieren des Abfahrens der festgelegten ersten Bearbeitungsbahn anhand der erzeugten ersten Bahndaten durch das virtuelle vorgegebene Werkzeug,
- Erzeugen von Bearbeltungsgeometrie-Modelldaten eines virtuellen 3D-Modells einer Bearbeitungsgeometrie des virtuellen Werkstücks, die einen virtuellen Abtragszustand des Werkstücks zu einem Bearbeitungszeitpunkt beschreiben, nachdem das Abfahren der ersten festgelegten Bearbeitungsbahn durch ein virtuelles vorgegebenes Werkzeug simuliert wurde,
- Bereitstellen von Fertigteilgeometrle-Modelldaten eines virtuellen 3D-Modells der Fertigteilgeometrie, die eine Fertigteilgeometrie des virtuellen Werkstücks beschreiben,
- Erzeugen von Differenzgeometrie-Modelldaten, die eine Differenzgeometrie des Materials beschreiben, das zum Erreichen der Fertigteilgeometrie noch von dem virtuellen Werkstück abgetragen werden muss, und
- Erzeugen von zweiten Bahndaten einschließlich Festlegen einer zweiten Bearbeitungsbahn anhand der Differenzgeometrie-Modelldaten mit der Maßgabe, dass das virtuelle vorgegebene Werkzeug bei Simulation des Abfahrens der zweiten Bearbeitungsbahn in Abhängigkeit eines maximalen Zerspanvolumens für das vorgegebene Werkzeug einen maximal großen Teil des Volumens der Differenzgeometrie des Werkstücks pro Zeiteinheit abträgt.

9. Verfahren zum Erzeugen von Steuerdaten nach einem der Ansprüche 1 bis 8, **dadurch gekennzeichnet, dass** die Bahndaten im Schritt Erzeugen (S204) von Bahndaten derart erzeugt werden, dass eine Bearbeitungsbahn in einer Mehrzahl von zusammenhängenden Bearbeitungsbahnteilstücken festgelegt wird, wobei in Abhängigkeit der Differenzgeometrie ein Bearbeitungsbahnanfangspunkt bestimmt wird, wobei ausgehend von dem Bearbeitungsbahnanfangspunkt in Abhängigkeit der Differenzgeometrie ein erstes Bearbeitungsbahnteilstück festgelegt wird, derart, dass das Zerspanvolumen ausgehend von dem Bearbeitungsbahnanfangspunkt maximiert wird, und wobei ausgehend von einem Endpunkt eines jeden der Mehrzahl von zusammenhängenden Bearbeitungsbahnteilstücken in Abhängigkeit der Differenzgeometrie ein weiteres Bearbeitungsbahnteilstück festgelegt wird, derart, dass das Zerspanvolumen ausgehend von dem Endpunkt des vorherigen Bearbeitungsbahnteilstücks maximiert wird, wobei entlang des ersten und der weiteren Bearbeltungsteilstücke kein Material von der Fertigteilgeometrie abgetragen wird.

10. Vorrichtung zum Erzeugen von Steuerdaten nach einem der Verfahren der Ansprüche 1 bis 9 zum Steuern eines vorgegebenen Werkzeugs (130) an einer Werkzeugmaschine (100) zum Bearbeiten eines eingespannten Werkstücks (150) von einem Rohteil in ein Fertigteil durch Zerspanen, wobei die Werkzeugmaschine (100) eine Steuervorrichtung zum Steuern des vorgegebenen Werkzeugs (130) umfasst, die das Steuern des vorgegebenen Werkzeugs (130) relativ zu dem eingespannten Werkstück (150) mit einer dreidimensionalen freien Werkzeugbewegung und einer freien Werkzeugorientierung um mindestens 5 Achsen ermöglicht, umfassend:
eine Bearbeitungsgeometrie-Modelldaten-Erzeugungseinrichtung (701) zum Erzeugen von Bearbeitungsgeometrie-Modelldaten einer Bearbeitungsgeometrie (320) des Werkstücks (150), die den Abtragszustand des Werkstücks (150) zu einem bestimmten Bearbeitungszeitpunkt beschreiben,
eine Fertigteilgeometrie-Modelldaten-Bereitstellungseinrichtung (702) zum Bereitstellen von Fertigteilgeometrie-Modelldaten, die eine Fertigteilgeometrie (340) des Werkstücks (150) beschreiben,
eine Differenzgeometrie-Modelldaten-Erzeugungseinrichtung (703) zum Erzeugen von Differenzgeometrie-Modelldaten, die eine Differenzgeometrie (330a, 330b) des Materials beschreiben, das zum Erreichen der Fertigteilgeometrie (340) noch abgetragen werden muss, und
eine Bahndaten-Erzeugungseinrichtung (705) zum Erzeugen von Bahndaten, die angeben, welche Bearbeitungsbahn das vorgegebene Werkzeug (130) mit welcher Vorschubgeschwindigkeit und welcher Werkzeugorientierung relativ zu dem Werkstück (150) abfahren soll, anhand der Differenzgeometrie-Modelldaten,
**dadurch gekennzeichnet, dass**
die Bahndaten derart erzeugt werden, dass das vorgegebene Werkzeug (130) beim Abfahren der anhand der Differenzgeometrie (330a, 330b) festgelegten Bearbeitungsbahn die Vorschubrichtung und die Orientierung relativ zu dem eingespannten Werkstück (150) in Abhängigkeit von der Differenzgeometrie (330a, 330b) ändert, unter der Maßgabe, dass das vorgegebene Werkzeug (130) in Abhängigkeit eines maximalen Zerspanvolumens für das vorgegebene Werkzeug (150) beim Abfahren der Bearbeitungsbahn einen maximal großen Teil des Volumens der Differenzgeometrie (330a, 330b) des Werkstücks (150) pro Zeiteinheit abträgt.

11. Vorrichtung nach Anspruch 10, weiterhin **dadurch gekennzeichnet, dass** die Vorrichtung (700) eine Werkzeugmaschinen-Parametererfassungseinrichtung (706) zum Erfassen von zulässigen Leistungsparametern und/oder kinetische Eigenschaften der Werkzeugmaschine (100) umfasst, wobei die Bahndaten-Erzeugungseinrichtung (705) die Bahndaten mit der zusätzlichen Maßgabe erzeugt, dass die maximalen Leistungsparameter und/oder kinetischen Eigenschaften der Werkzeugmaschine (100) bei Abfahren einer anhand der Bahndaten festgelegten Bearbeitungsbahn durch ein vorgegebenes Werkzeug (130) nicht überschritten werden.

12. Vorrichtung nach Anspruch 10 oder 11, weiterhin **dadurch gekennzeichnet, dass** die Vorrichtung (700) eine Werkzeugelgenschafts-Erfassungseinrichtung (706) zum Erfassen von Werkzeugeigenschaften der Werkzeuge der Werkzeugmaschine (100) umfasst, wobei die Werkzeugeigenschaften einen oder mehrere maximale Belastungswerte der Werkzeuge umfassen, und wobei die Bahndaten-Erzeugungseinrichtung (705) die Bahndaten mit der zusätzlichen Maßgabe erzeugt, dass ein oder mehrere Belastungswerte des vorgegebenen Werkzeugs (130) bei Abfahren einer anhand der Bahndaten festgelegten Bearbeitungsbahn den oder die maximalen Belastungswerte des vorgegebenen Werkzeugs (130) nicht überschreitet.

13. Vorrichtung nach einem der Ansprüche 10 bis 12, weiterhin **dadurch gekennzeichnet, dass** die Vorrichtung (700) eine Werkzeugbevorratungs-Erfassungseinrichtung (710) zum Erfassen der Werkzeugbevorratung der Werkzeugmaschine (100), eine Werkzeugauswähleinrichtung (708) zum Auswählen eines Werkzeugs (130) aus der erfassten Werkzeugbevorratung mit vergleichsweise hohem maximalen Zerspanvolumen in Abhängigkeit der Differenzgeometrie-Modelldaten als vorgegebenes Werkzeug (130) für eine nächste Bearbeitungsbahn und eine Werkzeugwechsel-Festlegungseinrichtung (709) zum Festlegen eines Werkzeugwechsels des bisher vorgegebenen Werkzeugs (130) mit einem für die nächste Bearbeitungsbahn ausgewählten vorgegebenen Werkzeug (130) in Abhängigkeit der erfassten Werkzeugbevorratung der Werkzeugmaschine (100) umfasst, wobei die Werkzeugwechsel-Festlegungseinrichtung (709) einen Werkzeugwechsel festlegt, wenn für die nächste Bearbeitungsbahn ein anderes Werkzeug aus der Werkzeugbevorratung der Werkzeugmaschine (100) als das bisher vorgegebene Werkzeug von der Werkzeugauswähleinrichtung als vorgegebenes Werkzeug (130) für die nächste Bearbeltungsbahn ausgewählt wird.

14. Vorrichtung nach einem der Ansprüche 10 bis 13, weiterhin **dadurch gekennzeichnet, dass** die Vorrichtung (700) eine Werkzeugmaschinengeometrie-Modelldaten-Erzeugungseinrichtung (707) zum Erzeugen von Werkzeugmaschinengeometrie-Modelldaten, die eine momentane Werkzeugmaschinengeometrie zu einem bestimmten Bearbeitungszeitpunkt des Werkstücks (150) beschreiben, umfasst, wobei die Werkzeugmaschinengeometrie eine Orientierung und Position des vorgegebenen Werkzeugs (130), von Elementen der Steuervorrichtung und von Einspannmitteln der Werkzeugmaschine zum Einspannen des Werkstücks umfasst,
wobei die Bahndaten-Erzeugungseinrichtung (705) die Bahndaten weiterhin anhand der Werkzeugmaschinengeometrie-Modelldaten und/oder anhand eines Vergleichs der Werkzeugmaschinengeometrie-Modelldaten mit den Bearbeitungsgeometrie-Modelldaten zu dem bestimmten Bearbeitungszeitpunkt mit der zusätzlichen Maßgabe erzeugt, dass eine Kollision von Elementen der Werkzeugmaschine (100) mit Elementen der Werkzeugmaschine (100) und von Elementen der Werkzeugmaschine (100), außer des vorgegebenen Werkzeugs, mit dem Werkstück (150) bei Abfahren der durch die Bahndaten festgelegten Bearbeitungsbahn durch das mindestens eine vorgegebene Werkzeug (130) verhindert wird.

15. Vorrichtung nach einem der Ansprüche 10 bis 14, weiterhin **dadurch gekennzeichnet, dass** die Vorrichtung (700) eine Darstellungseinrichtung (711) zum visuellen Darstellen eines virtuelles 3D-Modells der Rohteilgeometrie, der Zwischengeometrie, der Fertigteilgeometrie, der Differenzgeometrie und/oder der Werkzeugmaschine (100) umfasst

16. Vorrichtung nach einem der Ansprüche 10 bis 15, weiterhin **dadurch gekennzeichnet, dass**
die Bahndaten-Erzeugungseinrichtung (705) die Bahndaten anhand einer Simulation der Bearbeitung eines virtuellen Werkstücks an einer virtuellen Werkzeugmaschine erzeugt, wobei die Vorrichtung weiterhin eine Bearbeitungssimulationseinrichtung umfasst, zum Simulieren des Abfahrens einer anhand von durch die Bahndaten-Erzeugungseinrichtung erzeugten Bahndaten festgelegten Bearbeitungsbahn durch ein virtuelles vorgegebene Werkzeug, wobei
die Bearbeitungsgeometrie-Modelldaten-Erzeugungseinrichtung (701) Bearbeitungsgeometrie-Modelldaten eines virtuellen 3D-Modells einer Bearbeitungsgeometrie des virtuellen Werkstücks erzeugt, die einen virtuellen Abtragszustand des Werkstücks zu einem Bearbeitungszeitpunkt beschreiben, nachdem das Abfahren einer ersten festgelegten Bearbeitungsbahn durch ein virtuelles vorgegebenes Werkzeug durch die Bearbeitungssimulationseinrichtung simuliert wurde, die Fertigteilgeometrie-Bereitstellungseinrichtung Fertigteilgeometrie-Modelldaten eines virtuellen 3D-Modells der Fertigteilgeometrie bereitstellt, die eine Fertigtellgeometrie des virtuellen Werkstücks beschreiben,
die Differenzgeoletrie-Modelldaten-Erzeugungseinrichtung (703) Differenzgeometrie-Modelldaten erzeugt, die eine Differenzgeometrie des Materials beschreiben, das zum Erreichen der Fertigteilgeometrie noch von dem virtuellen Werkstück abgetragen werden muss, und
die Bahndaten-Erzeugungseinrichtung (705) zweite Bahndaten, die eine zweite Bearbeitungsbahn festlegen, anhand der Differenzgeometrie-Modelldaten mit der Maßgabe erzeugt, dass das virtuelle vorgegebene Werkzeug bei Simulation des Abfahrens der zweiten Bearbeitungsbahn durch die Bearbeitungssimulationseinrichtung in Abhängigkeit eines maximalen Zerspanvolumens für das vorgegebene Werkzeug einen maximal großen Teil des Volumens der Differenzgeometrie des Werkstücks pro Zeiteinheit abträgt.

## Claims

1. A method for generating control data for controlling a predetermined tool (130) on a machine tool (100) for machining a clamped workpiece (150) from a blank to a finished part, the machine tool (100) comprising a control device for controlling a predetermined tool (130) which enables the controlling of the predetermined tool (130) relative to the clamped workpiece (150) with a three-dimensional free tool movement and a free tool orientation about at least 5 axes, comprising the steps of:
- generating (S201) machining geometry model data of a machining geometry (320) of the workpiece (150), which describes the removal state of the workpiece (150) at a particular machining time,
- providing (S202) finished part geometry model data which describes a finished part geometry (340) of the workpiece (150),
- generating (S203) difference geometry model data which describes a difference geometry (330a, 330b) of the material which has yet to be removed in order to achieve the finished part geometry (340), and
- generating (S204) path data on the basis of the difference geometry model data, that indicates which machining path the predetermined tool (130) is to travel at what feed rate and with which tool orientation relative to the workpiece (150), **characterized in that**
the path data is generated such that the predetermined tool (130) changes the feed direction and the orientation relative to the claimed workpiece (150) in dependence of the difference geometry (330a, 330b) while traveling the machining path determined on the basis of the difference geometry (330a, 330b) with the proviso that the predetermined tool (130) removes a maximally large part of the volume of the difference geometry (330a, 330b) of the workpiece (150) per time unit while travelling the machining path in dependence of a maximum machining volume for the predetermined tool (130).

2. The method of claim 1, **characterized by** repeating one time or multiple times the steps of
- generating machining geometry model data,
- generating difference geometry model data, and
- generating path data on the basis of the difference geometry model data in this sequence,
wherein at least second machining geometry model data of a second machining geometry of the workpiece and second difference geometry model data are generated at a particular second machining time upon a first repetition of the steps after the tool (130) predetermined for a first machining path has travelled the first machining path on the basis of first path data, and second path data is generated on the basis of the second difference geometry model data with the proviso that a tool (130) predetermined for a second machining path removes a maximally large part of the volume of the particular second difference geometry of the workpiece (150) per time unit while travelling the second machining path in dependence of a maximum machining volume.

3. The method according of claim 2, further **characterized by** repeating one time or multiple times the steps of
- providing tool procurement data which describes the tool procurement of the machine tool (100) and indicates which tool characteristics the tools of the tool procurement of the tool machine have, and
- selecting a tool having a comparatively high maximum machining volume in dependence of the difference geometry model data as the predetermined tool for a next machining path, and optionally repeating one time or multiple times a step of
- determining (S504; S509) a tool change of a previously predetermined tool (130) by a tool selected for a next machining path in dependence of the tool procurement of the machine tool (100).

4. The method of any one of claims 1 to 3, **characterized in that** the path data is generated additionally in dependence of performance parameters and/or kinetic characteristics of the machine tool (100) such that the maximum performance parameters and/or kinetic characteristics of the machine tool are not exceeded when a predetermined tool (130) travels a machining path determined on the basis of the path data.

5. The method of any one of claims 1 to 4, **characterized in that** the path data is generated additionally in dependence of one or more maximum load values of the at least one predetermined tool (130) such that a load of the predetermined tool (130) while travelling a machining path determined on the basis of the path data does not exceed the maximum load value(s) of the predetermined tool (130).

6. The method of any one of claims 1 to 5, **characterized by** repeating one time or multiple times a step of generating (S604) machine tool geometry model data which describes a machine tool geometry at a particular machining time of the workpiece (150), wherein the machine tool geometry comprises a relative orientation and relative position of the predetermined tool (130), of elements of the control device and of clamping means (120) of the machine tool for clamping the workpiece (150),
wherein the path data is generated additionally on the basis of the machine tool geometry model data and/or on the basis of a comparison of the machine tool geometry model data with the machining geometry model data at the particular machining time with the proviso that a collision of elements of the machine tool (100) with elements of the machine tool (100) and of elements of the machine tool (100) other than the predetermined tool (130) with the workpiece (150) while a machining path determined on the basis of the generated path data is travelled by the predetermined tool (130) is prevented.

7. The method of any one of claims 1 to 6, **characterized in that** the model data is suited to generate a virtual 3D model of the blank geometry, the machining geometry, the finished part geometry, the difference geometry and/or the machine tool (100).

8. The method of claim 7, **characterized in that** the path data is generated on the basis of a simulation of the machining of a virtual workpiece on a virtual machine tool, the simulation comprising the following steps:
- generating a virtual 3D model of the workpiece in a raw state,
- generating first path data including determining a first machining path for a virtual predetermined tool,
- simulating the travelling of the determined first machining path on the basis of the generated first path data by the virtual predetermined tool,
- generating machining geometry model data of a virtual 3D model of a machining geometry of the virtual workpiece, which describes a virtual removal state of the workpiece at a machining time after the travelling of the first determined machining path by a virtual predetermined tool was simulated,
- providing finished part geometry model data of a virtual 3D model of the finished part geometry, which describes a finished part geometry of the virtual workpiece,
- generating difference geometry model data which describes a difference geometry of the material which yet has to be removed from the virtual workpiece in order to achieve the finished part geometry, and
- generating second path data including determining a second machining path on the basis of the difference geometry model data with the proviso that the virtual predetermined tool removes a maximally large part of the volume of the difference geometry of the workpiece per time unit upon simulation of the travelling of the second machining path in dependence of a maximum machining volume for the predetermined tool.

9. The method for generating control data of any one of claims 1 to 8, **characterized in that** the path data is generated in the step of generating (S204) path data such that a machining path is determined in a plurality of interconnected machining path sections, a machining path starting point being determined in dependence of the difference geometry, wherein a first machining path section is determined starting from the machining path starting point in dependence of the difference geometry such that the machining volume is maximized starting from the machining path starting point and wherein a further machining path section is determined starting from an end point of each of the plurality of interconnected machining path sections in dependence of the difference geometry such that the machining volume is maximized starting from the end point of the previous machining path section and no material of the finished part geometry is removed along the first and the further machining sections.

10. An apparatus for generating control data of any one of the methods of claims 1 to 9 for controlling a predetermined tool (130) on a machine tool (100) for machining a clamped workpiece (150) from a blank to a finished part, the machine tool (100) comprising a control device for controlling the predetermined tool (130), which enables the control of the predetermined tool (130) relative to the clamped workpiece (150) with a three-dimensional free tool movement and a free tool orientation about at least 5 axes, comprising:
a machining geometry model data generation unit (701) for generating machining geometry model data of a machining geometry (320) of the workpiece (150), which describes the removal state of the workpiece (150) at a particular machining time,
a finished part geometry model data provision unit (702) for providing finished part geometry model data which describes a finished part geometry (340) of the workpiece (150),
a difference geometry model data generation unit (703) for generating difference geometry model data which describes a difference geometry (330a, 330b) of the material that has yet to be removed in order to achieve the finished part geometry (340), and
a path data generation unit (705) for generating path data indicating which machining path the predetermined tool (130) is to travel at which feed rate and with which tool orientation relative to the workpiece (150) on the basis of the difference geometry model data,
**characterized in that**
the path data are generated such that the predetermined tool (130) changes the feed direction and the orientation relative to the clamped workpiece (150) in dependence of the difference geometry (330a, 330b) while traveling the machining path determined on the basis of the difference geometry (330a, 330b) with the proviso that the predetermined tool (130) removes a maximally large part of the volume of the difference geometry (330a, 330b) of the workpiece (150) per time unit while travelling the machining path in dependence of a maximum machining volume for the predetermined tool (150).

11. The apparatus of claim 10, further **characterized in that** the apparatus (700) comprises a machine tool parameter detection unit (706) for detecting admissible performance parameters and/or kinetic characteristics of the machine tool (100), the path data generation unit (705) generating the path data with the additional proviso that the maximum performance parameters and/or kinetic characteristics of the machine tool (100) are not exceeded when a predetermined tool (130) travels a machine path determined on the basis of the path data.

12. The apparatus of claim 10 or 11, further **characterized in that** the apparatus (700) comprises a tool characteristic detection unit (706) for detecting tool characteristics of the tools of the machine tool (100), the tool characteristics including one or more maximum load values of the tools and the path data generation unit (705) generating the path data with the additional proviso that one or more load values of the predetermined tool (130) do(es) not exceed the maximum load value(s) of the predetermined tool (130) when it travels the machining path determined on the basis of the path data.

13. The apparatus of any one of claims 10 to 12, further **characterized in that** the apparatus (700) comprises a tool procurement detection unit (710) for detecting the tool procurement of the machine tool (100), a tool selection unit (708) for selecting a tool (130) from the detected tool procurement which has a comparatively high maximum machining volume in dependence of the difference geometry model data as the predetermined tool (130) for a next machining path, and a tool change determination unit (709) for determining a tool change of the previously predetermined tool (130) by a predetermined tool (130) selected for the next machining path in dependence of the detected tool procurement of the machine tool (100), the tool change determination unit (709) determining a tool change if a tool other than the previously predetermined tool is selected for the next machining path as the predetermined tool (130) from the tool procurement of the machine tool (100) by the tool selection unit for the next machining path.

14. The apparatus of any one of claims 10 to 13, further **characterized in that** the apparatus (700) comprises a machine tool geometry model data generation unit (707) for generating machine tool geometry model data which describes a current machine tool geometry at a particular machining time of the workpiece (150), the machine tool geometry comprising an orientation and position of the predetermined tool (130), of elements of the control device and of clamping means of the machine tool for clamping the workpiece,
wherein the path data generation unit (705) furthermore generates the path data on the basis of the machine tool geometry model data and/or on the basis of a comparison of the machine tool geometry model data with the machining geometry model data at the particular machining time with the additional proviso that a collision of elements of the machine tool (100) with elements of the machine tool (100) and of elements of the machine tool (100) other than the predetermined tool with the workpiece (150) while the machining path determined by the path data is travelled by the at least one predetermined tool (130) is prevented.

15. The apparatus of any one of claims 10 to 14, further **characterized in that** the apparatus (700) comprises a display unit (711) for visually displaying a virtual 3D model of the blank geometry, the intermediate geometry, the finished part geometry, the difference geometry and/or the machine tool (100).

16. The apparatus of any one of claims 10 to 15, further **characterized in that**
the path data generation unit (705) generates the path data on the basis of a simulation of the machining of a virtual workpiece on a virtual machine tool, the apparatus furthermore comprising a machining simulation unit for simulating the travelling of a machining path determined on the basis of path data generated by the path data generation unit by a virtual predetermined tool, wherein
the machining geometry model data generation unit (701) generates machining geometry model data of a virtual 3D model of a machining geometry of the virtual workpiece, which describes a virtual removal state of the workpiece at a machining time after the travelling of a first determined machining path by a virtual predetermined tool was simulated by the machining simulation unit,
the finished part geometry provision unit provides finished part geometry model data of a virtual 3D model of the finished part geometry, which describes a finished part geometry of the virtual workpiece,
the difference geometry model data generation unit (703) generates difference geometry model data which describes a difference geometry of the material that has yet to be removed from the virtual workpiece in order to achieve the finished part geometry, and
the path data generation unit (705) generates second path data determining a second machining path on the basis of the difference geometry model data with the proviso that the virtual predetermined tool removes a maximally large part of the volume of the difference geometry of the workpiece per time unit upon simulation of the travelling of the second machining path by the machining simulation unit in dependence of a maximum machining volume for the predetermined tool.

## Revendications

1. Procédé de génération de données de commande en vue de commander un outil prédéterminé (130) sur une machine-outil (100) destinée à travailler une pièce serrée (150) par usinage à partir d'une pièce brute en une pièce finie, la machine-outil (100) comprenant un dispositif de commande d'un outil prédéterminé (130) qui permet la commande de l'outil prédéterminé (130) par rapport à la pièce serrée (150) avec un mouvement libre tridimensionnel de l'outil et avec une orientation libre de l'outil autour de 5 axes au moins, comprenant les étapes suivantes :
- la génération (S201) de données modèles d'une géométrie d'usinage (320) de la pièce (150), qui décrivent l'état d'enlèvement de matière de la pièce (150) à un moment d'usinage déterminé,
- la fourniture (S202) de données modèles de la géométrie de pièce finie, qui décrivent une géométrie finale (340) de la pièce (150),
- la génération (S203) de données modèles de géométrie différentielle, qui décrivent une géométrie différentielle (330a, 330b) du matériau qui reste encore à enlever pour atteindre la géométrie (340) de la pièce finie, et
- la génération (S204) de données de trajectoire qui indiquent quelle trajectoire d'usinage doit parcourir l'outil prédéterminé (130) à quelle vitesse d'avance et à quelle orientation de l'outil par rapport à la pièce (150), en se basant sur les données modèles de la géométrie différentielle,
**caractérisé en ce que**
les données de trajectoire sont générées de telle sorte que lors du parcours de la trajectoire d'usinage fixée à base de la géométrie différentielle (330a, 330b), l'outil prédéterminé (130) modifie la direction d'avance et l'orientation par rapport à la pièce serrée (150) en fonction de la géométrie différentielle (330a, 330b), étant entendu que l'outil prédéterminé (130) enlève une partie maximale du volume de la géométrie différentielle (330a, 330b) de la pièce (150) par unité de temps, en fonction d'un volume d'usinage maximal pour l'outil prédéterminé (130), lorsqu'il parcourt la trajectoire d'usinage.

2. Procédé selon la revendication 1, **caractérisé par** une seule ou multiple répétition des étapes suivantes :
- la génération de données modèles de la géométrie d'usinage,
- la génération de données modèles de la géométrie différentielle, et
- la génération de données de trajectoire à base des données modèles de la géométrie différentielle, dans cet ordre,
dans lequel, lors d'une première répétition des étapes, on génère au moins de secondes données modèles d'une seconde géométrie d'usinage de la pièce et de secondes données modèles de la géométrie différentielle à un second moment d'usinage déterminé, une fois que l'outil (130) prédéterminé pour une première trajectoire d'usinage a parcouru la première trajectoire d'usinage en se basant sur de premières données de trajectoire, et dans lequel on génère de secondes données de trajectoire en se basant sur les secondes données modèles de la géométrie différentielle, étant entendu qu'un outil (130) prédéterminé pour une seconde trajectoire d'usinage enlève une partie maximale du volume de la seconde géométrie différentielle déterminée de la pièce (150) par unité de temps, en fonction d'un volume d'usinage maximal de cet outil prédéterminé (130), lorsqu'il parcourt la seconde trajectoire d'usinage.

3. Procédé selon la revendication 2, **caractérisé en outre par** une unique ou multiple répétition des étapes suivantes :
- la fourniture de données de magasinage d'outils qui décrivent le magasinage d'outils de la machine-outil (100) et qui indiquent quelles sont les caractéristiques des outils du magasinage d'outils de la machine-outil, et
- la sélection d'un outil assurant un volume d'usinage maximal comparativement élevé en fonction des données modèles de la géométrie différentielle, à titre d'outil prédéterminé pour une trajectoire d'usinage suivante, et le cas échéant une unique ou multiple répétition d'une étape de
- définition (S504; S509) d'un changement d'outil d'un outil (130) déterminé jusqu'alors contre un outil choisi pour une trajectoire d'usinage suivante en fonction du magasinage d'outils de la machine-outil (100).

4. Procédé selon l'une des revendications 1 à 3, **caractérisé en ce que** les données de trajectoire sont générées en supplément en fonction des paramètres de performances et/ou des caractéristiques cinétiques de la machine-outil (100) de telle sorte que les paramètres de performances maximales et/ou les caractéristiques cinétiques maximales de la machine-outil ne sont pas dépassé(e)s lorsqu'un outil prédéterminé (130) parcourt une trajectoire d'usinage définie à base des données de trajectoire.

5. Procédé selon l'une des revendications 1 à 4, **caractérisé en ce que** les données de trajectoire sont générées en supplément en fonction d'une ou de plusieurs valeurs de sollicitation maximales dudit au moins un outil prédéterminé (130), de telle sorte qu'une sollicitation de l'outil prédéterminé (130), lorsqu'il parcourt une trajectoire d'usinage définie à base des données de trajectoire, ne dépasse pas la ou les valeurs de sollicitation maximales de l'outil prédéterminé (130).

6. Procédé selon l'une des revendications 1 à 5, **caractérisé par** une unique ou multiple répétition d'une étape de génération (S604) de données modèles de la géométrie de la machine-outil, données qui décrivent une géométrie de la machine-outil à un moment d'usinage déterminé de la pièce (150), la géométrie de la machine-outil comprenant une orientation relative et une position relative de l'outil prédéterminé (130), d'éléments du dispositif de commande et de moyens de serrage (120) de la machine-outil destinés à serrer la pièce (150),
les données de trajectoire étant générées en supplément en se basant sur les données modèles de la géométrie de machine-outil et/ou en se basant sur une comparaison des données modèles de la géométrie de machine-outil avec des données modèles de la géométrie d'usinage au moment d'usinage déterminé, étant entendu qu'une collision d'éléments de la machine-outil (100) avec des éléments de la machine-outil (100) et d'éléments de la machine-outil (100), mis à part l'outil prédéterminé (130), avec la pièce (150) - lorsque l'outil prédéterminé (130) parcourt une trajectoire d'usinage définie à base des données de trajectoire générées - est empêchée.

7. Procédé selon l'une des revendications 1 à 6, **caractérisé en ce que** les données modèles sont aptes à générer un modèle virtuel tridimensionnel de la géométrie de la pièce brute, de la géométrie d'usinage, de la géométrie de la pièce finie, de la géométrie différentielle et/ou de la machine-outil (100).

8. Procédé selon la revendication 7, **caractérisé en ce que** les données de trajectoire sont générées à partir d'une simulation de l'usinage d'une pièce virtuelle sur une machine-outil virtuelle, la simulation comprenant les étapes suivantes :
- la génération d'un modèle virtuel tridimensionnel de la pièce à l'état brut,
- la génération de premières données de trajectoire, y compris la définition d'une première trajectoire d'usinage pour un outil virtuel prédéterminé,
- la simulation du parcours de l'outil virtuel prédéterminé suivant la première trajectoire d'usinage définie à partir des premières données de trajectoire générées,
- la génération de données modèles de la géométrie d'usinage d'un modèle virtuel tridimensionnel d'une géométrie d'usinage de la pièce virtuelle, qui décrivent un état virtuel d'enlèvement de matière de la pièce à un moment d'usinage, une fois que le parcours d'un outil virtuel prédéterminé suivant la première trajectoire d'usinage définie a été simulé,
- la fourniture de données modèles de la géométrie de pièce finie d'un modèle virtuel tridimensionnel de la géométrie de pièce finie, qui décrivent une géométrie finale de la pièce d'usinage virtuelle,
- la génération de données modèles de la géométrie différentielle, qui décrivent une géométrie différentielle du matériau qui reste encore à enlever de la pièce d'usinage virtuelle pour atteindre la géométrie de pièce finie, et
- la génération de secondes données de trajectoire, y compris la définition d'une seconde trajectoire d'usinage à partir des données modèles de la géométrie différentielle, étant entendu que l'outil virtuel prédéterminé, lors de la simulation du parcours de la seconde trajectoire d'usinage, enlève une partie maximale du volume de la géométrie différentielle de la pièce d'usinage par unité de temps, en fonction d'un volume d'usinage maximal pour l'outil prédéterminé.

9. Procédé de génération de données de commande selon l'une des revendications 1 à 8, **caractérisé en ce que** les données de trajectoire sont générées dans l'étape de génération (S204) de données de trajectoire de telle sorte qu'une trajectoire d'usinage est définie dans une pluralité de tronçons contigus de la trajectoire d'usinage, un point initial de la trajectoire d'usinage étant déterminé en fonction de la géométrie différentielle, un premier tronçon de la trajectoire d'usinage étant déterminé à partir du point initial de la trajectoire d'usinage et en fonction de la géométrie différentielle, de telle sorte que le volume à usiner est maximalisé à partir du point initial de la trajectoire d'usinage, et un autre tronçon de la trajectoire d'usinage étant défini à partir d'un point final de chacun parmi la pluralité de tronçons contigus de la trajectoire d'usinage en fonction de la géométrie différentielle, de telle sorte que le volume à usiner est maximalisé à partir du point final de la trajectoire d'usinage, aucun matériau n'étant enlevé de la géométrie de la pièce finie, le long du premier tronçon et des autres tronçons de la trajectoire d'usinage.

10. Dispositif de génération de données de commande selon l'un des procédés des revendications 1 à 9 en vue de commander un outil prédéterminé (130) sur une machine-outil (100) destinée à travailler une pièce serrée (150) par usinage à partir d'une pièce brute en une pièce finie, la machine-outil (100) comprenant un dispositif de commande de l'outil prédéterminé (130) qui permet la commande de l'outil prédéterminé (130) par rapport à la pièce serrée (150) avec un mouvement libre tridimensionnel de l'outil et avec une orientation libre de l'outil autour de 5 axes au moins, comprenant :
- un moyen (701) de génération de données modèles d'une géométrie d'usinage, destiné à générer des données modèles d'une géométrie d'usinage (320) de la pièce (150), qui décrivent l'état d'enlèvement de matière de la pièce (150) à un moment d'usinage déterminé,
- un moyen (702) de fourniture de données modèles de la géométrie de pièce finie, destiné à fournir des données modèles qui décrivent une géométrie finale (340) de la pièce (150),
- un moyen (703) de génération de données modèles de la géométrie différentielle, destiné à générer des données modèles qui décrivent une géométrie différentielle (330a, 330b) du matériau qui reste encore à enlever pour atteindre la géométrie (340) de la pièce finie, et
- un moyen (705) de génération de données de trajectoire, destiné à générer des données de trajectoire qui indiquent quelle trajectoire d'usinage doit parcourir l'outil prédéterminé (130) à quelle vitesse d'avance et avec quelle orientation de l'outil par rapport à la pièce (150), en se basant sur les données modèles de la géométrie différentielle,
**caractérisé en ce que**
les données de trajectoire sont générées de telle sorte que lors du parcours de la trajectoire d'usinage définie à partir de la géométrie différentielle, l'outil prédéterminé (130) modifie la direction d'avance et l'orientation par rapport à la pièce serrée (150) en fonction de la géométrie différentielle (330a, 330b), étant entendu que l'outil prédéterminé (130) enlève une partie maximale du volume de la géométrie différentielle (330a, 330b) de la pièce (150) par unité de temps, en fonction d'un volume d'usinage maximal pour l'outil prédéterminé (150), lorsqu'il parcourt la trajectoire d'usinage.

11. Dispositif selon la revendication 10, **caractérisé en outre en ce que** le dispositif (700) comprend un moyen (706) de détection des paramètres de la machine-outil, destiné à détecter des paramètres de performances admissibles et/ou des caractéristiques cinétiques admissibles de la machine-outil (100), et le moyen (705) de génération de données de trajectoire génère les données de trajectoire, étant entendu en supplément que les paramètres de performances maximales et/ou les caractéristiques cinétiques maximales de la machine-outil (100) ne sont pas dépassés lorsqu'un outil prédéterminé (130) parcourt la trajectoire d'usinage définie à partir des données de trajectoire.

12. Dispositif selon la revendication 10 ou 11, **caractérisé en outre en ce que** le dispositif (700) comprend un moyen (706) de détection des caractéristiques des outils, destiné à détecter les caractéristiques des outils de la machine-outil (100), les caractéristiques des outils comprenant une ou plusieurs valeurs de sollicitation maximales des outils, et le moyen (705) de génération de données de trajectoire génère les données de trajectoire, étant entendu en supplément qu'une ou plusieurs valeurs de sollicitation de l'outil prédéterminé (130) ne dépasse(nt) pas la ou les valeurs de sollicitation maximales de l'outil prédéterminé (130), lorsqu'il parcourt une trajectoire d'usinage définie à partir des données de trajectoire.

13. Dispositif selon l'une des revendications 10 à 12, **caractérisé en outre en ce que** le dispositif (700) comprend un moyen (710) de détection de magasinage d'outils, destiné à détecter le magasinage d'outils de la machine-outil (100), un moyen (708) de sélection d'outil, destiné à sélectionner un outil (130) dans le magasinage détecté d'outils avec un volume d'usinage maximal comparativement élevé en fonction des données modèles de la géométrie différentielle, à titre d'outil prédéterminé (130) pour une trajectoire d'usinage suivante, et un moyen (709) de définition d'un changement d'outil, destiné à définir un changement d'outil d'un outil (130) prédéterminé jusqu'alors contre un outil prédéterminé (130) choisi pour la trajectoire d'usinage suivante en fonction du magasinage détecté d'outils de la machine-outil (100), le moyen (709) de définition d'un changement d'outil définissant un changement d'outil lorsque pour la trajectoire d'usinage suivante, le moyen de sélection d'outil sélectionne, dans le magasinage d'outils de la machine-outil (100), un outil autre que celui déterminé jusqu'alors, à titre d'outil prédéterminé (130) pour la trajectoire d'usinage suivante.

14. Dispositif selon l'une des revendications 10 à 13, **caractérisé en outre en ce que** le dispositif (700) comprend un moyen (707) de génération de données modèles d'une géométrie de machine-outil, destiné à générer des données modèles d'une géométrie de machine-outil, qui décrivent une géométrie de machine-outil momentanée à un moment déterminé de l'usinage de la pièce (150), la géométrie de machine-outil comprenant une orientation et une position de l'outil prédéterminé (130), d'éléments du dispositif de commande et de moyens de serrage de la machine-outil destinés à serrer la pièce,
dans lequel le moyen (705) de génération de données de trajectoire génère en outre les données de trajectoire en se basant sur les données modèles de la géométrie de machine-outil et/ou en se basant sur une comparaison des données modèles de la géométrie de machine-outil avec les données modèles de la géométrie d'usinage au moment d'usinage déterminé, étant entendu en supplément qu'une collision d'éléments de la machine-outil (100) avec des éléments de la machine-outil (100) et d'éléments de la machine-outil (100), mis à part l'outil prédéterminé, avec la pièce (150) - lorsque ledit au moins un outil prédéterminé (130) parcourt la trajectoire d'usinage définie par les données de trajectoire - est empêchée.

15. Dispositif selon l'une des revendications 10 à 14, **caractérisé en outre en ce que** le dispositif (700) comprend un moyen de représentation (711) pour la représentation visuelle d'un modèle virtuel tridimensionnel de la géométrie de la pièce brute, de la géométrie intermédiaire, de la géométrie de la pièce finie, de la géométrie différentielle et/ou de la machine-outil (100).

16. Dispositif selon l'une des revendications 10 à 15, **caractérisé en outre en ce que**
le moyen (705) de génération de données de trajectoire génère les données de trajectoire en se basant sur une simulation de l'usinage d'une pièce virtuelle sur une machine-outil virtuelle, le dispositif comprenant en outre un moyen de simulation d'usinage destiné à simuler le parcours d'une trajectoire d'usinage définie à partir des données de trajectoire générées par le moyen de génération de données de trajectoire et parcourue par un outil virtuel prédéterminé, dans lequel
le moyen (701) de génération de données modèles de la géométrie d'usinage génère des données modèles de la géométrie d'usinage d'un modèle virtuel tridimensionnel d'une géométrie d'usinage de la pièce virtuelle, qui décrivent un état virtuel d'enlèvement de matière de la pièce à un moment d'usinage, une fois que le parcours d'un outil virtuel prédéterminé suivant une première trajectoire d'usinage définie a été simulé par le moyen de simulation d'usinage,
le moyen de fourniture de la géométrie de pièce finie fournit des données modèles de géométrie de pièce finie d'un modèle virtuel tridimensionnel de la géométrie de la pièce finie, qui décrivent une géométrie finale de la pièce d'usinage virtuelle,
le moyen (703) de génération de données modèles de la géométrie différentielle génère des données modèles de la géométrie différentielle qui décrivent une géométrie différentielle du matériau qui reste encore à enlever de la pièce d'usinage virtuelle pour atteindre la géométrie de la pièce finie, et
le moyen (705) de génération de données de trajectoire génère de secondes données de trajectoire qui définissent une seconde trajectoire d'usinage en se basant sur les données modèles de la géométrie différentielle, étant entendu que l'outil virtuel prédéterminé - lors de la simulation du parcours de la seconde trajectoire d'usinage par le moyen de simulation d'usinage - enlève une partie maximale du volume de la géométrie différentielle de la pièce d'usinage par unité de temps, en fonction d'un volume d'usinage maximal pour l'outil prédéterminé.
